(19) Europäisches Patentamt
European Patent Office
Office européen des brevets

(11) **EP 4 579 615 A1**

(12) **EUROPEAN PATENT APPLICATION**
published in accordance with Art. 153(4) EPC

(43) Date of publication:
**02.07.2025 Bulletin 2025/27**

(51) International Patent Classification (IPC):
*G06V 20/40* (2022.01)

(21) Application number: 23870350.8

(22) Date of filing: **14.09.2023**

(86) International application number:
**PCT/CN2023/118708**

(87) International publication number:
**WO 2024/067113 (04.04.2024 Gazette 2024/14)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **28.09.2022 CN 202211192232**

(71) Applicant: **Huawei Technologies Co., Ltd.
Shenzhen, Guangdong 518129 (CN)**

(72) Inventors:
• **LI, Yinchuan**
  **Shenzhen, Guangdong 518129 (CN)**
• **SHAO, Yunfeng**
  **Shenzhen, Guangdong 518129 (CN)**

(74) Representative: **Goddar, Heinz J.
Boehmert & Boehmert
Anwaltspartnerschaft mbB
Pettenkoferstrasse 22
80336 München (DE)**

(54) **ACTION PREDICTION METHOD AND RELATED DEVICE THEREOF**

(57) This application discloses an action prediction method and a related device therefor, and provides a new action prediction manner. In this manner, a predicted action is accurate, so that after performing the predicted action, an agent can obtain a maximum reward or achieve a specific goal. The method in this application includes: After obtaining state information indicating that a first agent and a second agent are in a first state, the first agent may process the state information by using a generative flow model, to obtain occurrence probabilities of N actions of the first agent. An $i^{th}$ action in the N actions is used to enable the first agent and the second agent to enter an $i^{th}$ second state from the first state. In this way, the first agent completes action prediction for the first state.

FIG. 5

**Description**

This application claims priority to Chinese Patent Application No. 202211192232.2, filed with the China National Intellectual Property Administration on September 28, 2022 and entitled "ACTION PREDICTION METHOD AND RELATED DEVICE THEREFOR", which is incorporated herein by reference in its entirety.

**TECHNICAL FIELD**

Embodiments of this application relate to the field of artificial intelligence (artificial intelligence, AI) technologies, and in particular, to an action prediction method and a related device therefor.

**BACKGROUND**

With rapid development of AI technologies, a neural network model is widely used to describe and resolve action policy selection in a process of interaction between an agent (agent) and an environment, so that the agent can maximize a reward or achieve a specific goal after performing a corresponding action.

Currently, after determining that a specific agent is in an initial state, a neural network model provided in a conventional technology may process information associated with the initial state of the agent, to predict an action of the agent. The action of the agent is used to enable the agent to enter a terminal state from the initial state. In this way, the agent may perform the action predicted by the neural network model, to reach the terminal state.

In the foregoing process, when predicting the action of the agent, the neural network model considers only information about the agent. Because of a single factor considered, the action predicted in this manner is not accurate enough (that is, not practical enough). Consequently, after completing the predicted action, the agent cannot maximize a reward or achieve a specific goal.

**SUMMARY**

Embodiments of this application provide an action prediction method and a related device therefor, and provides a new action prediction manner. In this manner, a predicted action is accurate, so that after performing the predicted action, an agent can obtain a maximum reward or achieve a specific goal.

A first aspect of embodiments of this application provides an action prediction method. The method includes: When a first agent and a second agent are in a first state in an environment (the first state may be an initial state in a generative flow model, or may be an intermediate state), the first agent may collect state information of the first agent from the current environment. The state information may indicate that the first agent and the second agent are in the first state.

After obtaining the state information of the first agent, the first agent may input the state information of the first agent into a generative flow model disposed on the first agent, to process the state information of the first agent by using the generative flow model. In this way, occurrence probabilities of N joint actions between the first agent and the second agent are obtained. Herein, $N \geq 1$.

For any one of the N joint actions, namely, for an $i^{th}$ joint action, the $i^{th}$ joint action is used to enable the first agent and the second agent to enter an $i^{th}$ second state from the first state in the environment, and the $i^{th}$ joint action is constructed based on an $i^{th}$ independent action in N independent actions of the first agent and an $i^{th}$ independent action in N independent actions of the second agent. It may be understood that, for the $i^{th}$ joint action, an occurrence probability of the $i^{th}$ joint action is an occurrence probability of the $i^{th}$ independent action in the N independent actions of the first agent, namely, an occurrence probability of the $i^{th}$ independent action in the N independent actions of the second agent. In this way, the first agent completes action prediction for the first state. Herein, i=1, ..., N.

It can be learned from the foregoing method that after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes the action of the first agent and the action of the second agent. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information of the first agent may be information collected when the first agent is in the first state. The information may be an image photographed by the first agent through a camera, or may be a video photographed by the first agent through a camera, or may be an audio collected by the first agent through a microphone, or may be a text generated by the first agent, or the like.

In a possible implementation, after the state information is processed by using the generative flow model, to obtain the occurrence probabilities of the N joint actions between the first agent and the second agent, the method further includes: selecting a joint action with a highest occurrence probability from the N joint actions; and executing an action that is of the first agent and that is included in the joint action with the highest occurrence probability. In the foregoing manner, after the occurrence probabilities of the N joint actions are obtained, the first agent may select the joint action with the highest occurrence probability from the N joint actions, and perform the independent action that is of the first agent and that is included in the joint action, to enter a second state in N second states. In this way, the first agent completes action execution for the first state.

A second aspect of embodiments of this application provides an action prediction method. The method includes: When a first agent and a second agent are in a first state in an environment (the first state may be an initial state in a generative flow model, or may be an intermediate state), the first agent may collect state information of the first agent from the current environment. The state information may indicate that the first agent and the second agent are in the first state.

After obtaining the state information of the first agent, the first agent may input the state information of the first agent into a generative flow model disposed on the first agent, to process the state information of the first agent by using the generative flow model. In this way, occurrence probabilities of N independent actions of the first agent are obtained. Herein, $N \geq 1$.

For any one of the N independent actions, namely, for an $i^{th}$ independent action, the $i^{th}$ independent action is used to enable the first agent and the second agent to enter an $i^{th}$ second state from the first state in the environment. In this way, the first agent completes action prediction for the first state. Herein, i=1, ..., N.

It can be learned from the foregoing method that after obtaining the state information indicating that the first agent and the second agent are in the first state, the first agent may process the state information by using the generative flow model, to obtain occurrence probabilities of N actions of the first agent. An $i^{th}$ action in the N actions is used to enable the first agent and the second agent to enter an $i^{th}$ second state from the first state. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, after the state information is processed by using the generative flow model, to obtain the occurrence probabilities of the N actions of the first agent, the method further includes: selecting an action with a highest occurrence probability from the N actions; and executing the action with the highest occurrence probability.

A third aspect of embodiments of this application provides a model training method. The method includes: When a to-be-trained model needs to be trained, a batch of training data may be obtained. The batch of training data includes state information of a first agent, and the state information indicates that the first agent and a second agent are in a first state. It should be noted that a reward value corresponding to the first state is known.

After the state information of the first agent is obtained, the first agent may input the state information of the first agent into a generative flow model of the first agent, to process the state information by using the to-be-trained model. In this way, occurrence probabilities of N joint actions (namely, N joint actions flowing out from the first state) between the first agent and the second agent are obtained. An $i^{th}$ joint action flowing out from the first state in the N joint actions flowing out from the first state is used to enable the first agent and the second agent to enter an $i^{th}$ second state from the first state, and the $i^{th}$ joint action flowing out from the first state includes an $i^{th}$ independent action in N independent actions of the first agent and an $i^{th}$ independent action in N independent actions of the second agent. Herein, i=1, ..., N.

The occurrence probabilities of the N joint actions flowing out from the first state are obtained. A parameter of the to-be-trained model may be updated based on the occurrence probabilities of the N joint actions flowing out from the first state, until a model training condition is met, to obtain the generative flow model.

The generative flow model obtained through training in the foregoing method has a function of predicting an action of an agent. Specifically, after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes the action of the first agent and the action of the second agent. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, that the parameter of the to-be-trained model is updated based on the occurrence probabilities of the N joint actions, until the model training condition is met, to obtain the generative flow model includes: determining a target loss based on occurrence probabilities of M joint actions between the first agent and the second agent, the occurrence probabilities of the N joint actions, and a reward value corresponding to the first state, where a $j^{th}$ joint action in the M joint actions is used to enable the first agent and the second agent to enter the first state from a $j^{th}$ third state, j=1, ..., M, and M≥1; and updating the parameter of the to-be-trained model based on the target loss, until the model training condition is met, to obtain the generative flow model. In the foregoing implementation, after the occurrence probabilities of the N joint actions flowing out from the first state are obtained, the first agent may further obtain the occurrence probabilities of the M joint actions (namely, the M joint actions between the first agent and the second agent) flowing into the first state. It should be noted that, the $j^{th}$ joint action flowing into the first state in the M joint actions flowing into the first state is used to enable the first agent and the second agent to enter the first state from a $j^{th}$ third state. Therefore, the occurrence probabilities of the M joint actions flowing into the first state, the occurrence probabilities of the N joint actions flowing out from the first state, and the reward value corresponding to the first state may be calculated, to obtain the target loss.

A fourth aspect of embodiments of this application provides a model training method. The method includes: When a to-be-trained model of a first agent needs to be trained, a batch of training data may be obtained. The batch of training data includes state information of a first agent, and the state information indicates that the first agent and a second agent are in a first state. It should be noted that a reward value corresponding to the first state is known.

After the state information of the first agent is obtained, the first agent may input the state information of the first agent into a generative flow model of the first agent, to process the state information by using the to-be-trained model of the first agent. In this way, occurrence probabilities of N independent actions (namely, N independent actions of the first agent that flow out from the first state) of the first agent are obtained.

After obtaining the occurrence probabilities of the N independent actions of the first agent that flow out from the first state, the first agent may further obtain, from the second agent, occurrence probabilities of N independent actions of the second agent that flow out from the first state. The occurrence probabilities of the N independent actions of the second agent that flow out from the first state are obtained by using a to-be-trained model of the second agent.

Then, the first agent may calculate the occurrence probabilities of the N independent actions of the first agent that flow out from the first state and the occurrence probabilities of the N independent actions of the second agent that flow out from the first state, to obtain occurrence probabilities of N joint actions flowing out from the first state. An $i^{th}$ joint action flowing out from the first state in the N joint actions flowing out from the first state is used to enable the first agent and the second agent to enter an $i^{th}$ second state from the first state, and i=1, ..., N.

Then, the first agent may update a parameter of the to-be-trained model of the first agent based on the occurrence probabilities of the N joint actions flowing out from the first state, until a model training condition is met, to obtain the generative flow model of the first agent.

The generative flow model obtained through training in the foregoing method has a function of predicting an action of an agent. Specifically, after obtaining the state information indicating that the first agent and the second agent are in the first state, the first agent may process the state information by using the generative flow model, to obtain occurrence probabilities of N actions of the first agent. An $i^{th}$ action in the N actions is used to enable the first agent and the second agent to enter the $i^{th}$ second state from the first state. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, that the parameter of the to-be-trained model of the first agent is updated based on the occurrence probabilities of the N joint actions, until the model training condition is met, to obtain the generative flow model of the first agent includes: determining a target loss based on occurrence probabilities of M joint actions between the first agent and the second agent, the occurrence probabilities of the N joint actions, and a reward value corresponding to the first state, where a $j^{th}$ joint action in the M joint actions is used to enable the first agent and the second agent to enter the first state from a $j^{th}$ third state, j=1, ..., M, and M≥1; and updating the parameter of the to-be-trained model of the first agent based on the target loss, until the model training condition is met, to obtain the generative flow model of the first agent.

A fifth aspect of embodiments of this application provides an action prediction apparatus. The apparatus includes: an obtaining module, configured to obtain state information of a first agent, where the state information indicates that the first agent and a second agent are in a first state; and a processing module, configured to process the state information by using a generative flow model, to obtain occurrence probabilities of N joint actions between the first agent and the second agent. An $i^{th}$ joint action is used to enable the first agent and the second agent to enter an $i^{th}$ second state from the first state, the $i^{th}$ joint action includes an action of the first agent and an action of the second agent, i=1, ..., N, and $N \geq 1$.

It can be learned from the foregoing apparatus that after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes the action of the first agent and the action of the second agent. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, the processing module is configured to: select a joint action with a highest occurrence probability from the N joint actions; and perform an action that is of the first agent and that is included in the joint action with the highest occurrence probability.

A sixth aspect of embodiments of this application provides an action prediction apparatus. The apparatus includes: an obtaining module, configured to obtain state information of a first agent, where the state information indicates that the first agent and a second agent are in a first state; and a processing module, configured to process the state information by using a generative flow model, to obtain occurrence probabilities of N actions of the first agent. An $i^{th}$ joint action is used to enable the first agent and the second agent to enter an $i^{th}$ second state from the first state, i=1, ..., N, and $N \geq 1$.

It can be learned from the foregoing apparatus that after obtaining the state information indicating that the first agent and the second agent are in the first state, the first agent may process the state information by using the generative flow model, to obtain occurrence probabilities of N actions of the first agent. An $i^{th}$ action in the N actions is used to enable the first agent and the second agent to enter an $i^{th}$ second state from the first state. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, the processing module is configured to: select an action with a highest occurrence probability from the N actions; and perform the action with the highest occurrence probability.

A seventh aspect of embodiments of this application provides a model training apparatus. The apparatus includes: an obtaining module, configured to obtain state information of a first agent, where the state information indicates that the first agent and a second agent are in a first state; a processing module, configured to process the state information by using a to-be-trained flow model, to obtain occurrence probabilities of N joint actions between the first agent and the second agent, where an $i^{th}$ joint action in the N joint actions is used to enable the first agent and the second agent to enter an $i^{th}$ second state from the first state, the $i^{th}$ joint action includes an action of the first agent and an action of the second agent, and i=1, ..., N; and an updating module, configured to update a parameter of the to-be-trained model based on the occurrence probabilities of the N joint actions, until a model training condition is met, to obtain a generative flow model.

The generative flow model obtained through training by the apparatus has a function of predicting an action of an agent. Specifically, after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes the action of the first agent and the action of the second agent. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, the updating module is configured to: determine a target loss based on occurrence probabilities of M joint actions between the first agent and the second agent, the occurrence probabilities of the N joint actions, and a reward value corresponding to the first state, where a $j^{th}$ joint action in the M joint actions is used to enable the first agent and the second agent to enter the first state from a $j^{th}$ third state, j=1, ..., M, and M≥1; and update the parameter of the to-be-trained model based on the target loss, until the model training condition is met, to obtain the generative flow model.

An eighth aspect of embodiments of this application provides a model training apparatus. The apparatus includes: an obtaining module, configured to obtain state information of a first agent, where the state information indicates that the first agent and a second agent are in a first state; a first processing module, configured to process the state information by using a to-be-trained model of the first agent, to obtain occurrence probabilities of N actions of the first agent, where N≥1; a second processing module, configured to determine occurrence probabilities of N joint actions between the first agent and the second agent based on the occurrence probabilities of the N actions of the first agent and occurrence probabilities of N actions of the second agent, where the N actions of the second agent are obtained by using a to-be-trained model of the second agent, and an $i^{th}$ joint action in the N joint actions is used to enable the first agent and the second agent to enter an $i^{th}$ second state from the first state; and an updating module 1404, configured to update a parameter of the to-be-trained model of the first agent based on the occurrence probabilities of the N joint actions, until a model training condition is met, to obtain a generative flow model of the first agent.

The generative flow model obtained through training by the apparatus has a function of predicting an action of an agent. Specifically, after obtaining the state information indicating that the first agent and the second agent are in the first state, the first agent may process the state information by using the generative flow model, to obtain the occurrence probabilities of the N actions of the first agent. An $i^{th}$ action in the N actions is used to enable the first agent and the second agent to enter the $i^{th}$ second state from the first state. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

In a possible implementation, the state information is information collected when the first agent is in the first state, and the information includes at least one of the following: an image, a video, an audio, or a text.

In a possible implementation, the state information is information collected when the first agent is in the first state, and the information includes at least one of the following: an image, a video, an audio, or a text.

In a possible implementation, the updating module is configured to: determine a target loss based on occurrence probabilities of M joint actions between the first agent and the second agent, the occurrence probabilities of the N joint actions, and a reward value corresponding to the first state, where a $j^{th}$ joint action in the M joint actions is used to enable the first agent and the second agent to enter the first state from a $j^{th}$ third state, j=1, ..., M, and M≥1; and update the parameter of the to-be-trained model of the first agent based on the target loss, until the model training condition is met, to obtain the generative flow model of the first agent.

A ninth aspect of embodiments of this application provides an action prediction apparatus. The apparatus includes a memory and a processor. The memory stores code, the processor is configured to execute the code, and when the code is executed, the action prediction apparatus performs the method according to any one of the first aspect, the possible implementations of the first aspect, the second aspect, or the possible implementations of the second aspect.

A tenth aspect of embodiments of this application provides a model training apparatus. The apparatus includes a memory and a processor. The memory stores code, the processor is configured to execute the code, and when the code is executed, the model training apparatus performs the method according to any one of the third aspect, the possible implementations of the third aspect, the fourth aspect, or the possible implementations of the fourth aspect.

An eleventh aspect of embodiments of this application provides a circuit system. The circuit system includes a processing circuit, and the processing circuit is configured to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

A twelfth aspect of embodiments of this application provides a chip system. The chip system includes a processor, configured to invoke a computer program or a computer instruction stored in a memory, so that the processor performs the method according to any one of the first aspect, the possible implementations of the first aspect, the second aspect, the possible implementations of the second aspect, the third aspect, the possible implementations of the third aspect, the fourth aspect, or the possible implementations of the fourth aspect.

In a possible implementation, the processor is coupled to the memory through an interface.

In a possible implementation, the chip system further includes a memory. The memory stores a computer program or computer instructions.

A thirteenth aspect of embodiments of this application provides a computer storage medium. The computer storage medium stores a computer program, and when the program is executed by a computer, the computer is enabled to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

A fourteenth aspect of embodiments of this application provides a computer program product. The computer program product stores instructions, and when the instructions are executed by a computer, the computer is enabled to perform the method according to any one of the first aspect, the possible implementations of the first aspect, the second aspect, the possible implementations of the second aspect, the third aspect, the possible implementations of the third aspect, the fourth aspect, or the possible implementations of the fourth aspect.

In embodiments of this application, after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes the action of the first agent and the action of the second agent. In this way, the first agent completes action prediction for the first state. In the foregoing process, because the state information of the first agent indicates information related to the first agent and the second agent, when predicting an action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

## BRIEF DESCRIPTION OF DRAWINGS

FIG. 1 is a diagram of a structure of an artificial intelligence main framework;

FIG. 2a is a diagram of a structure of a video processing system according to an embodiment of this application;

FIG. 2b is a diagram of another structure of a video processing system according to an embodiment of this application;

FIG. 2c is a diagram of a related device of video processing according to an embodiment of this application;

FIG. 3 is a diagram of an architecture of a system 100 according to an embodiment of this application;

FIG. 4 is a diagram of a structure of a generative flow model according to an embodiment of this application;

FIG. 5 is a schematic flowchart of an action prediction method according to an embodiment of this application;

FIG. 6 is a diagram of another structure of a generative flow model according to an embodiment of this application;

FIG. 7 is a schematic flowchart of an action prediction method according to an embodiment of this application;

FIG. 8 is a diagram of another structure of a generative flow model according to an embodiment of this application;

FIG. 9 is a schematic flowchart of a model training method according to an embodiment of this application;

FIG. 10 is a schematic flowchart of a model training method according to an embodiment of this application;

FIG. 11 is a diagram of a structure of an action prediction apparatus according to an embodiment of this application;

FIG. 12 is a diagram of another structure of an action prediction apparatus according to an embodiment of this application;

FIG. 13 is a diagram of a structure of a model training apparatus according to an embodiment of this application;

FIG. 14 is a diagram of another structure of a model training apparatus according to an embodiment of this application;

FIG. 15 is a diagram of a structure of an execution device according to an embodiment of this application;

FIG. 16 is a diagram of a structure of a training device according to an embodiment of this application; and

FIG. 17 is a diagram of a structure of a chip according to an embodiment of this application.

## DESCRIPTION OF EMBODIMENTS

Embodiments of this application provide an action prediction method and a related device therefor, and provides a new action prediction manner. In this manner, a predicted action is accurate, so that after performing the predicted action, an agent can obtain a maximum reward or achieve a specific goal.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

With rapid development of AI technologies, a neural network model is widely used to describe and resolve action policy selection in a process of interaction between an agent and an environment, so that the agent can maximize a reward or achieve a specific goal after performing a corresponding action.

Currently, after determining that a specific agent is in an initial state, a neural network model provided in a conventional technology may process information associated with the initial state of the agent, to predict an action of the agent. The action of the agent is used to enable the agent to enter a terminal state from the initial state. In this way, the agent may perform the action predicted by the neural network model, to reach the terminal state. For example, it is assumed that the agent is a vehicle in a self-driving scenario. After the vehicle goes straight and approaches an intersection, the vehicle detects that a red light appears at the intersection (for example, a camera of the vehicle photographs the red light that appears at the intersection). In this case, that the vehicle travels to the intersection at which the red light appears may be considered as an initial state of the vehicle. In this case, the vehicle may input, into the neural network model, information indicating that the vehicle is in the initial state (for example, an image in which the camera photographs the red light that appears at the intersection). The model may analyze the information, to predict an action to be performed by the vehicle (for example, the vehicle stops driving), so that the vehicle performs the action, and stops before the intersection at which the red light appears, which may be considered as the terminal state of the vehicle.

In the foregoing process, when predicting the action of the agent, the neural network model considers only information about the agent. Because of a single factor considered, the action predicted in this manner is not accurate enough (that is, not practical enough). Consequently, after completing the predicted action, the agent cannot maximize a reward or achieve a specific goal.

To resolve the foregoing problem, an embodiment of this application provides an action prediction method. The method may be implemented in combination with an artificial intelligence (artificial intelligence, AI) technology. The AI technology is a technical discipline that simulates, extends, and expands human intelligence by using a digital computer or a machine controlled by a digital computer. The AI technology obtains an optimal result by perceiving an environment, obtaining knowledge, and using knowledge. In other words, the artificial intelligence technology is a branch of computer science, and attempts to understand essence of intelligence and produce a new intelligent machine that can react in a similar manner to human intelligence. Using artificial intelligence to process data is a common application manner of artificial intelligence.

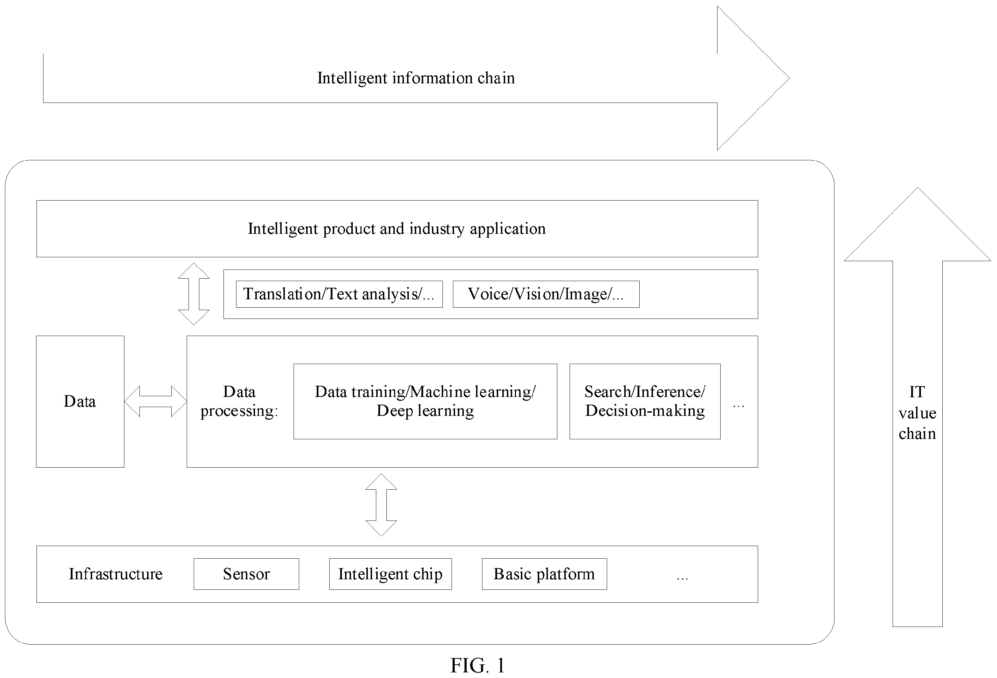

An overall working procedure of an artificial intelligence system is first described. FIG. 1 is a diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

(1) Infrastructure

The infrastructure provides computing capability support for the artificial intelligence system, implements communication with the external world, and implements support by using a basic platform. The infrastructure communicates with the external world by using a sensor. A computing capability is provided by an intelligent chip (a hardware acceleration chip such as a CPU, an NPU, a GPU, an ASIC, or an FPGA). The basic platform includes related platforms such as a distributed computing framework and a network for assurance and support, including cloud storage and computing, an interconnection network, and the like. For example, the sensor communicates with the outside to obtain data, and the data is provided to an intelligent chip in a distributed computing system provided by the basic platform for computing.

(2) Data

Data at an upper layer of the infrastructure indicates a data source in the artificial intelligence field. The data relates to a graph, an image, a speech, and a text, further relates to Internet of Things data of a conventional device, and includes service data of an existing system and perception data such as force, displacement, a liquid level, a temperature, and humidity.

(3) Data processing

Data processing usually includes data training, machine learning, deep learning, searching, inference, decision making, and the like.

Machine learning and deep learning may mean performing symbolic and formal intelligent information modeling, extraction, preprocessing, training, and the like on data.

Inference is a process in which a human intelligent inference manner is simulated in a computer or an intelligent system, and machine thinking and problem resolving are performed by using formalized information according to an inference control policy. Typical functions are searching and matching.

Decision making is a process of making a decision after intelligent information is inferred, and usually provides functions such as classification, ranking, and prediction.

(4) General capability

After the data processing mentioned above is performed on the data, some general capabilities may further be formed based on a data processing result. For example, the general capability may be an algorithm or a general system, for example, translation, text analysis, computer vision processing, speech recognition, or image recognition.

(5) Intelligent product and industry application

The intelligent product and industry application are products and applications of the artificial intelligence system in various fields. The intelligent product and industry application involve packaging overall artificial intelligence solutions, to productize and apply intelligent information decision-making. Application fields of the intelligent information decision-making mainly include smart terminals, smart transportation, smart health care, self-driving, smart cities, and the like.

The following describes several application scenarios of this application.

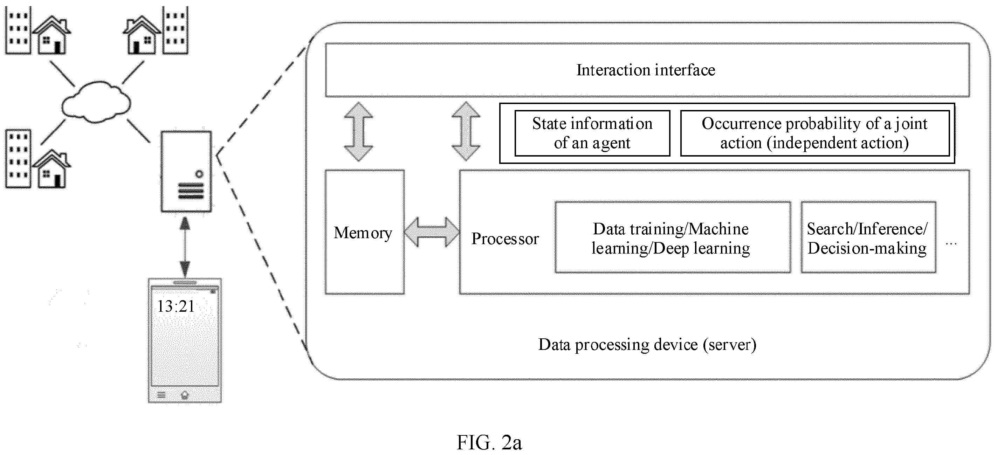

FIG. 2a is a diagram of a structure of an action prediction system according to an embodiment of this application. The action prediction system includes an agent and a data processing device. The agent includes a smart terminal such as a robot, a vehicle-mounted device, or an unmanned aerial vehicle. The agent is an initiator of action prediction. As an initiator of an action prediction request, the agent may independently initiate a request.

The data processing device may be a device or a server that has a data processing function, for example, a cloud server, a network server, an application server, or a management server. The data processing device receives the action prediction request from the smart terminal through an interaction interface, and then performs information processing in manners such as machine learning, deep learning, searching, inference, and decision-making by using a memory that stores data and a processor that processes data. The memory in the data processing device may be a general name, and includes a local storage and a database storing historical data. The database may be in the data processing device, or may be in another network server.

In the action prediction system shown in FIG. 2a, in a process of interaction between the agent and an environment, the agent may obtain state information of the agent, and then initiate a request to the data processing device, so that the data processing device performs an action prediction application for the state information obtained by the agent, to obtain an occurrence probability of an action of the agent. For example, a specific agent may obtain state information indicating that the agent and another agent are in a specific state, and initiate a processing request for the state information to the data processing device. Then, the data processing device may invoke a generative flow model to process the state information, to obtain an occurrence probability of a joint action between the agent and the another agent, and return the occurrence probability of the joint action to the agent. The joint action may enable the agent and the another agent to enter a next state from the state. In this way, action prediction for the agent is completed. Because the joint action is constructed based on an independent action of the agent and an independent action of the another agent, the agent may select a joint action with a highest occurrence probability, and perform the independent action that is of the agent and that is included in the joint action, to enter the next state. For another example, a specific agent may obtain state information indicating that the agent and another agent are in a specific state, and initiate a processing request for the state information to the data processing device. Then, the data processing device may invoke a generative flow model to process the state information, to obtain an occurrence probability of an independent action of the agent, and return the occurrence probability of the independent action to the agent. The independent action may enable the agent and the another agent to enter a next state from the state. In this way, action prediction for the agent is completed. In this case, the agent may select an independent action with a highest occurrence probability, and perform the independent action, to enter the next state.

In FIG. 2a, the data processing device may perform an action prediction method in embodiments of this application.

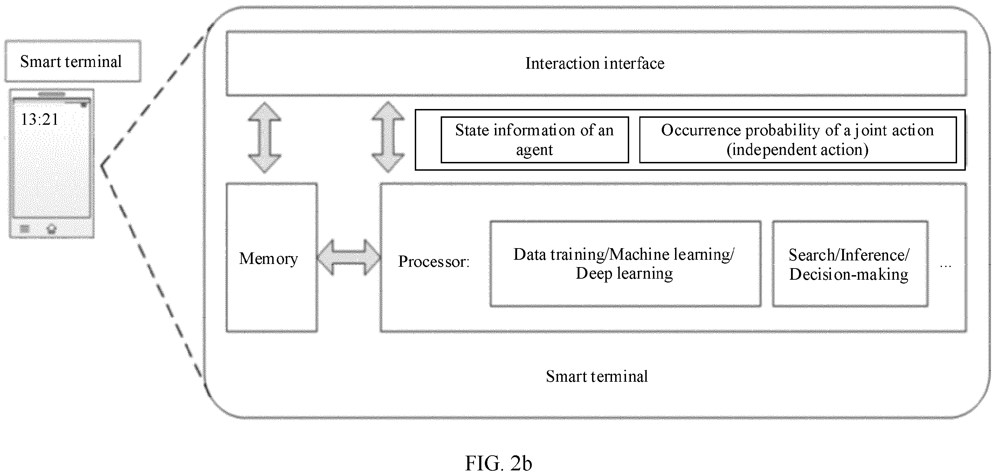

FIG. 2b is a diagram of another structure of an action prediction system according to an embodiment of this application. In FIG. 2b, an agent may complete action prediction, and the agent can directly obtain state information of the agent, and directly perform processing by using hardware of the agent. A specific process is similar to that in FIG. 2a. For details, refer to the foregoing descriptions. Details are not described herein again.

In the action prediction system shown in FIG. 2b, for example, a specific agent may obtain state information indicating that the agent and another agent are in a specific state, and process the state information, to obtain an occurrence probability of a joint action between the agent and the another agent. The joint action may enable the agent and the another agent to enter a next state from the state. In this way, action prediction for the agent is completed. Because the joint action is constructed based on an independent action of the agent and an independent action of the another agent, the agent may select a joint action with a highest occurrence probability, and perform the independent action that is of the agent and that is included in the joint action, to enter the next state. For another example, a specific agent may obtain state information indicating that the agent and another agent are in a specific state, and invoke a generative flow model to process the state information, to obtain an occurrence probability of an independent action of the agent. The independent action may enable the agent and the another agent to enter a next state from the state. In this way, action prediction for the agent is completed. In this case, the agent may select an independent action with a highest occurrence probability, and perform the independent action, to enter the next state.

In FIG. 2b, the agent may perform an action prediction method in embodiments of this application.

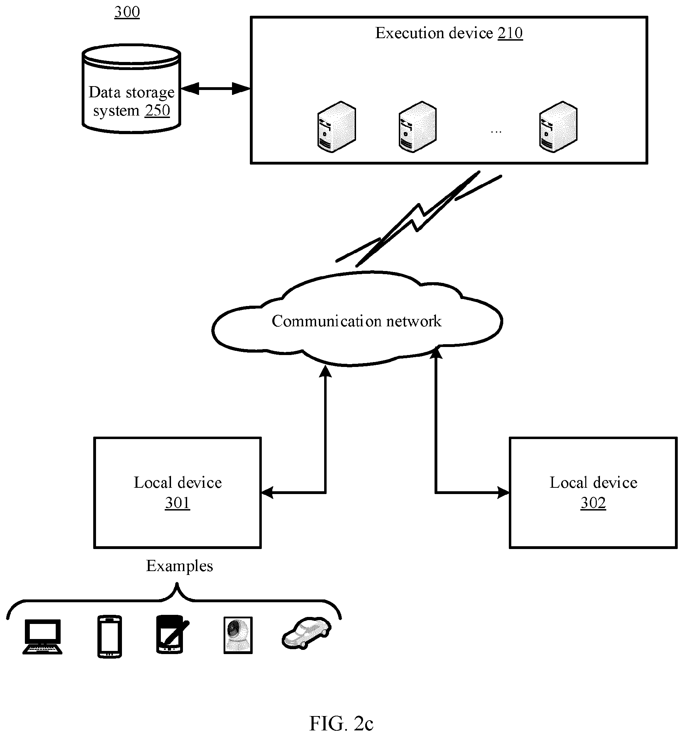

FIG. 2c is a diagram of a related device of action prediction according to an embodiment of this application.

The agent in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

A processor in FIG. 2a and FIG. 2b may perform data training/machine learning/deep learning by using a neural network model or another model (for example, a generative flow model), and complete an action prediction application for state information of the agent by using a model obtained through final data training or learning, to predict an action of the agent.

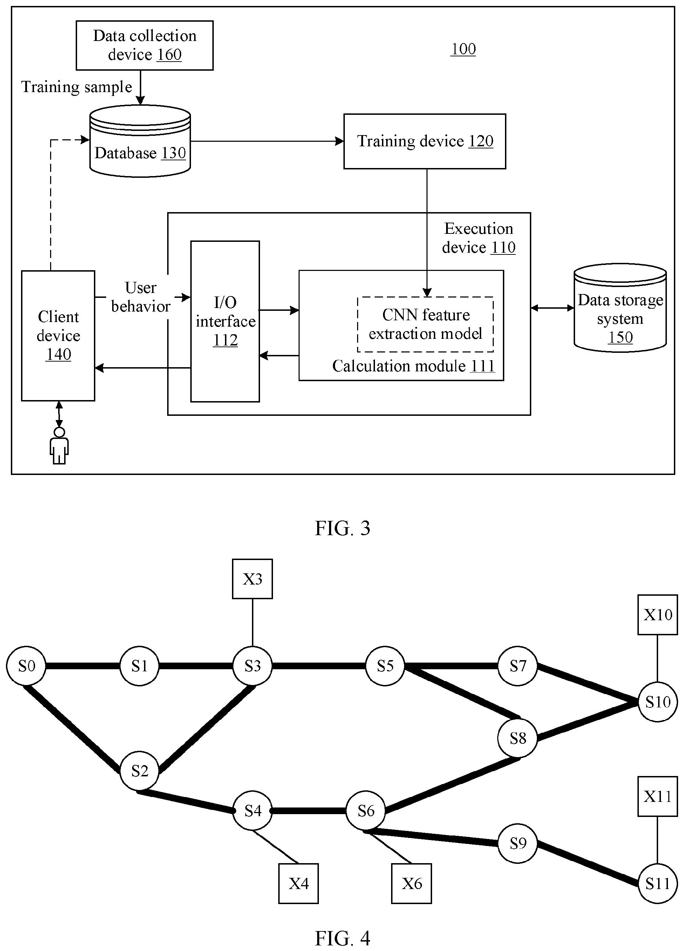

FIG. 3 is a diagram of an architecture of a system 100 according to an embodiment of this application. In FIG. 3, an execution device 110 is configured with an input/output (input/output, I/O) interface 112, to exchange data with an external device. A client device 140 (namely, the foregoing agent) inputs data into the I/O interface 112. In this embodiment of this application, the input data may include each to-be-scheduled task, a resource that can be invoked, and another parameter.

In a process in which the execution device 110 preprocesses the input data, or in a process in which a calculation module 111 of the execution device 110 performs related processing such as calculation (for example, performs function implementation of a neural network in this application), the execution device 110 may invoke data, code, and the like in a data storage system 150 for corresponding processing, and may further store, in the data storage system 150, data, an instruction, and the like that are obtained through corresponding processing.

Finally, the I/O interface 112 returns a processing result to the client device 140.

It should be noted that, for different objectives or different tasks, a training device 120 may generate corresponding target model/rules based on different training data. The corresponding target model/rules may be used to achieve the foregoing objectives or complete the foregoing tasks, to provide a required result for the user. The training data may be stored in a database 130, and is a training sample collected by a data collection device 160.

In a case shown in FIG. 3, the user may manually provide input data and the user may manually provide the input data in an interface provided by the I/O interface 112. In another case, the client device 140 may automatically send the input data to the I/O interface 112. If the client device 140 needs to obtain authorization from the user to automatically send the input data, the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 3 is merely a diagram of a system architecture according to an embodiment of this application. A position relationship between the devices, the components, the modules, and the like shown in the figure does not constitute any limitation. For example, in FIG. 3, the data storage system 150 is an external memory relative to the execution device 110. In another case, the data storage system 150 may alternatively be disposed in the execution device 110. As shown in FIG. 3, a neural network may be obtained through training based on the training device 120.

An embodiment of this application further provides a chip. The chip includes a neural network processing unit NPU. The chip may be disposed in the execution device 110 shown in FIG. 3, to complete calculation work of the calculation module 111. The chip may alternatively be disposed in the training device 120 shown in FIG. 3, to complete training work of the training device 120 and output the target model/rule.

The neural network processing unit NPU serves as a coprocessor, and may be disposed on a host central processing unit (central processing unit, CPU) (host CPU). The host CPU assigns a task. A core part of the NPU is an operation circuit, and a controller controls the operation circuit to extract data in a memory (a weight memory or an input memory) and perform an operation.

In some implementations, the operation circuit includes a plurality of processing units (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches data corresponding to the matrix B from a weight memory, and caches the data on each PE in the operation circuit. The operation circuit fetches data of the matrix A from an input memory, performs a matrix operation with the matrix B, to obtain a partial result or a final result of a matrix, and stores the result in an accumulator (accumulator).

A vector calculation unit may perform further processing such as vector multiplication, vector addition, an exponent operation, a logarithm operation, or value comparison on an output of the operation circuit. For example, the vector calculation unit may be configured to perform network calculation, such as pooling (pooling), batch normalization (batch normalization), or local response normalization (local response normalization) at a non-convolutional/non-FC layer in a neural network.

In some implementations, the vector calculation unit can store a processed output vector in a unified cache. For example, the vector calculation unit may apply a nonlinear function to an output, for example, a vector of an accumulated value, of the operation circuit to generate an activation value. In some implementations, the vector calculation unit generates a normalized value, a combined value, or both a normalized value and a combined value. In some implementations, the processed output vector can be used as an activated input to the operation circuit, for example, the processed output vector can be used at a subsequent layer of the neural network.

A unified memory is configured to store input data and output data.

For weight data, a storage unit access controller (direct memory access controller, DMAC) directly transfers input data in the external memory to the input memory and/or the unified memory, stores, into the weight memory, weight data in the external memory, and stores, into the external memory, the data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

(1) Neural network

The neural network may include a neuron. The neuron may be an operation unit that uses xs and an intercept of 1 as an input. An output of the operation unit may be as follows:

$$h_{W,b}\left(x\right) = f\left(W^{T}x\right) = f\left(\sum\nolimits_{s=1}^{n} W_{s}x_{s} + b\right)$$

$$(1)$$

Herein, s=1, 2, ..., n, n is a natural number greater than 1, Ws is a weight of xs, b is a bias of the neuron, and f is an activation function (activation function) of the neuron, and is used to introduce a nonlinear feature into the neural network to convert an input signal in the neuron into an output signal. The output signal of the activation function may serve as an input of a next convolution layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression $y = a(Wx + b)$. From a physical layer, work at each layer of the neural network may be understood as completing transformation from input space to output space (namely, from row space to column space of a matrix) by performing five operations on the input space (a set of input vectors). The five operations are as follows: 1. dimension increasing/dimension reduction; 2. scaling up/scaling down; 3. rotation; 4. translation; and 5. "bending". The operations 1, 2, and 3 are completed by $Wx$, the operation 4 is completed by $+b$, and the operation 5 is implemented by $a()$. The word "space" is used herein for expression because a classified object is not a single thing, but a type of things. Space is a set of all individuals of this type of things. $W$ is a weight vector, and each value in the vector represents a weight value of one neuron at this layer of a neural network. The vector $W$ determines space transformation from the input space to the output space described above. In other words, a weight $W$ at each layer controls how to transform space. A purpose of training the neural network is to finally obtain a weight matrix (a weight matrix including vectors $W$ at a plurality of layers) at all layers of a trained neural network. Therefore, a training process of the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (there is usually an initialization process before the first update, that is, a parameter is preconfigured for each layer of the neural network). For example, if the predicted value of the network is large, the weight vector is adjusted to lower the predicted value until the neural network can predict the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss as much as possible.

(2) Back propagation algorithm

In the training process, the neural network may correct the value of the parameter in the initial neural network model based on the error back propagation (back propagation, BP) algorithm, so that the reconstruction error loss of the neural network model becomes smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

(3) Generative flow model (generative flow networks, GFlowNets)

The generative flow model is usually a model constructed in a form of a directed acyclic graph. To be specific, each state node has at least one parent state node, which is different from that each state node in a tree structure has only one parent state node. The generative flow model has a unique initial state node and a plurality of terminal state nodes. The generative flow model starts action prediction from the initial state node, to complete a transition between different states, until the terminal state node is reached.

The initial state node may include output traffic, an intermediate state node may include input traffic, output traffic, and a preset reward value, and the terminal node may include input traffic and a preset reward value. Specifically, the generative flow model may be considered as a water pipe. The output traffic of the initial state node is a total inflow of the entire generative flow model, and a sum of input traffic of all terminal state nodes is a total outflow of the entire generative flow model. For each intermediate state node, the input traffic is equal to the output traffic. The input traffic and the output traffic of each intermediate state node are predicted by using the neural network, and finally, the input traffic of each terminal state node can be predicted.

For example, as shown in FIG. 4 (FIG. 4 is a diagram of a structure of a generative flow model according to an embodiment of this application), in the generative flow model, si represents a state node (i=0, ..., 11), and xj represents a composite structure (j=3, 4, 6, 10, 11). s0 is an initial state node, s10 and s11 are terminal state nodes, x3, x4, x6, x10, and x11 are composite structures, and a reward value is set in the composite structure. Output traffic of the initial state node S0 is equal to a sum of input traffic of the intermediate state node S1 and input traffic of the intermediate state node S2, ..., input traffic of the terminal state node S10 is equal to a sum of output traffic of the intermediate state node S7 and output traffic of the intermediate state node S8, and input traffic of the terminal state node S11 is equal to a sum of output traffic of the intermediate state node S9.

The following describes the method provided in this application from a neural network training side and a neural network application side.

A model training method provided in embodiments of this application relates to data sequence processing, and may be specifically applied to methods such as data training, machine learning, and deep learning, to perform symbolic and formalized intelligent information modeling, extraction, preprocessing, training, and the like on training data (for example, state information of a first agent in the model training method provided in embodiments of this application), and finally obtain a trained neural network (for example, a generative flow model in the model training method provided in embodiments of this application). In addition, in the action prediction method provided in embodiments of this application, input data (for example, the state information of the first agent in the action prediction method provided in embodiments of this application) may be input into the trained neural network by using the trained neural network, to obtain output data (for example, occurrence probabilities of N joint actions between the first agent and a second agent or occurrence probabilities of N actions of the first agent in the action prediction method provided in embodiments of this application). It should be noted that, the model training method and the action prediction method provided in embodiments of this application are inventions generated based on a same idea, or may be understood as two parts in a system, or two phases of an entire procedure, for example, a model training phase and a model application phase.

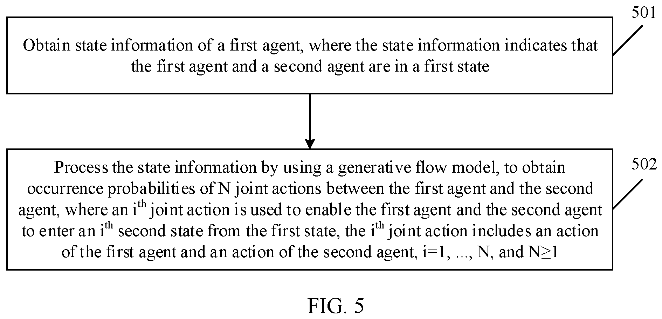

It should be noted that the action prediction method provided in embodiments of this application may be applied to a plurality of scenarios. Concepts such as an agent, an action, and a state in the method change with an application scenario. For example, in a self-driving scenario, a vehicle may predict a next driving action of the vehicle based on a current driving status of the vehicle and a current driving status of another vehicle in a traffic environment, and perform the driving action, to change the driving status of the vehicle and the driving status of the another vehicle in the traffic environment. For another example, in a supply chain scenario, a robot may predict a next transportation direction of the robot based on a current transportation status of the robot and a current transportation status of another robot in a workshop, and move forward in the direction, to change the transportation status of the robot and the transportation status of the another robot in the workshop. For another example, in an advertisement recommendation scenario, an advertiser may predict a switch between advertisement content based on advertisement content currently recommended by the advertiser to a user, and perform the switch, to change the advertisement content recommended by the advertiser to the user. For another example, in a game scenario, a game player may predict a next operation of the game player based on a competitive status of the game player and a competitive status of another game player in a virtual game environment, and perform the operation, to change the competitive status of the game player and the competitive status of the another game player in the virtual game environment. The following further describes an action prediction method provided in an embodiment of this application with reference to FIG. 5. FIG. 5 is a schematic flowchart of an action prediction method according to an embodiment of this application. As shown in FIG. 5, the method includes the following steps.

501: Obtain state information of a first agent, where the state information indicates that the first agent and a second agent are in a first state.

In this embodiment, it is assumed that the first agent and the second agent exist in an environment, the first agent and the second agent are two associated agents (that is, independent actions of the two agents affect each other), and the two agents continuously interact with the environment, that is, perform various independent actions in the environment, to change a state of the two agents in the environment. It should be noted that the first agent may independently predict an independent action of the first agent, and perform the independent action, to continuously change a state of the first agent in the environment. Similarly, the same is true to the second agent. Because prediction operations performed by the first agent and the second agent are similar, for ease of description, the following provides schematic descriptions by using the first agent as an example.

If the first agent and the second agent are in the first state in the environment (the first state may be an initial state (node) in a generative flow model, or may be an intermediate state (node)), the first agent may collect the state information of the first agent from the current environment. The state information may indicate that the first agent and the second agent are in the first state. The state information of the first agent may be information collected when the first agent is in the first state. The information may be an image photographed by the first agent through a camera, or may be a video photographed by the first agent through a camera, or may be an audio collected by the first agent through a microphone, or may be a text generated by the first agent, or the like.

For example, it is assumed that the first agent and the second agent are respectively a vehicle 1 and a vehicle 2 in a self-driving scenario, and the vehicle 1 and the vehicle 2 respectively go straight on two adjacent lanes and arrive at an intersection. To predict an independent action to be performed by the vehicle 1 when the vehicle 1 arrives at the intersection and an independent action to be performed by the vehicle 2 when the vehicle 2 arrives at the intersection, the vehicle 1 may take a photo in this case. Content of the photo shows the intersection at which the vehicle 1 is about to arrive and the vehicle 2 that is going straight next to the vehicle 1. It can be learned that the photo indicates that the vehicle 1 and the vehicle are to arrive at the intersection (that is, the vehicle 1 and the vehicle 2 are in an initial state S0).

502: Process the state information by using a generative flow model, to obtain occurrence probabilities of N joint actions between the first agent and the second agent, where an $i^{th}$ joint action is used to enable the first agent and the second agent to enter an $i^{th}$ second state from the first state, the $i^{th}$ joint action includes an action of the first agent and an action of the second agent, i=1, ..., N, and N≥1.

After obtaining the state information of the first agent, the first agent may input the state information of the first agent into a generative flow model disposed on the first agent, to perform processing (for example, a series of feature extraction processing) on the state information of the first agent by using the generative flow model. In this way, the occurrence probabilities of the N joint actions (N is a positive integer greater than or equal to 1) between the first agent and the second agent are obtained.

Any one of the N joint actions, namely, the $i^{th}$ joint action, is used to enable the first agent and the second agent to enter the $i^{th}$ second state (the second state may also be understood as a state after the first state in the generative flow model) from the first state in the environment, and the $i^{th}$ joint action is constructed based on an $i^{th}$ independent action in N independent actions of the first agent and an $i^{th}$ independent action in N independent actions of the second agent. It may be understood that, for the $i^{th}$ joint action, an occurrence probability of the $i^{th}$ joint action is an occurrence probability of the $i^{th}$ independent action in the N independent actions of the first agent, and is also an occurrence probability of the $i^{th}$ independent action in the N independent actions of the second agent. In this way, the first agent completes action prediction for the first state. Herein, i=1, ..., N.

In this way, the first agent may select a joint action with a highest occurrence probability from the N joint actions, and perform an independent action that is of the first agent and that is included in the joint action, to enter a second state in N second states. In this way, the first agent completes action execution for the first state.

Then, because the first agent and the second agent are in a second state in the environment, the first agent may collect new state information from the environment. The new state information indicates that the first agent and the second agent are in the second state in the environment. The first agent may process the new state information by using the generative flow model of the first agent, to complete action prediction for the second state and action execution for the second state (for this process, reference may be made to related descriptions of action prediction for the first state and action execution for the first state, and details are not described herein), and action prediction and action execution are not stopped until a terminal state is entered.

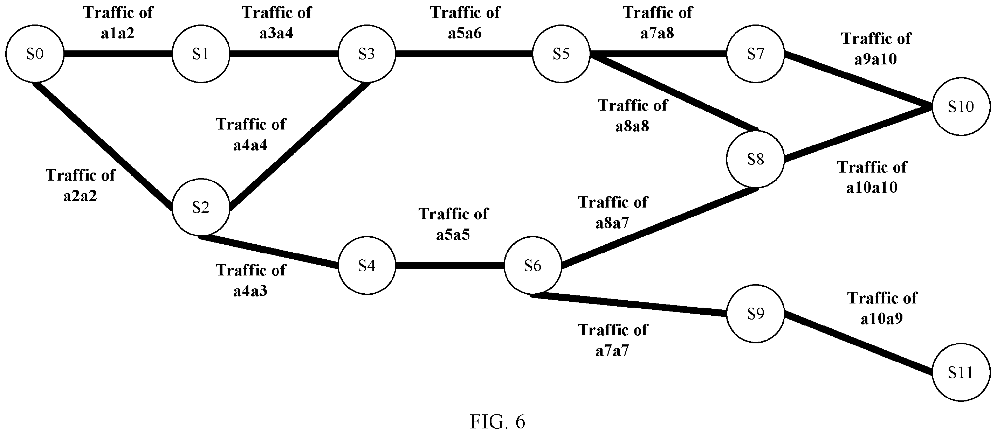

Still as shown in the foregoing example, as shown in FIG. 6 (FIG. 6 is a diagram of another structure of a generative flow model according to an embodiment of this application), after the vehicle 1 inputs a photo taken by the vehicle 1 into a generative flow model of the vehicle 1, the generative flow model may determine, based on the photo, that the vehicle 1 and the vehicle 2 are in an initial state node S0 (that is, the vehicle 1 and the vehicle 2 are in the initial state S0). In this case, the generative flow model may process the photo, to obtain traffic of a joint action a1a2 (which may also be referred to as an occurrence probability of the joint action a1a2) between the vehicle 1 and the vehicle 2 and traffic of a joint action a2a2 between the vehicle 1 and the vehicle 2.

The joint action a1a2 includes an independent action a1 (for example, turning left at the intersection) of the vehicle 1 and an independent action a2 (for example, walking straight at the intersection) of the vehicle 2, the joint action a2a2 includes an independent action a2 of the vehicle 1 and an independent action a2 of the vehicle 2, the joint action a1a2 is used to enable the vehicle 1 and the vehicle 2 to directly enter an intermediate state node S1 from the initial state node S0 (which may also be referred to as that the joint action ala2 flows out from the initial state node S0 and flows into the intermediate state node S1), and the joint action a2a2 is used to enable the vehicle 1 and the vehicle 2 to directly enter the intermediate state node S2 from the initial state node S0. In addition, a sum of the traffic of the joint action ala2 and the traffic of the joint action a2a2 is output traffic of the initial state node S0, the traffic of the joint action ala2 is input traffic of the intermediate state node S1, and the traffic of the joint action a2a2 is input traffic of the intermediate state node S2.

It is assumed that the traffic of the joint action ala2 is greater than the traffic of the joint action a2a2. In this case, the vehicle 1 may select the joint action a1a2, consider the traffic of the joint action a1a2 as traffic of the independent action a1, and perform the independent action a1, that is, turn left at the intersection. Similarly, the vehicle 2 also performs action prediction similar to that of the vehicle 1, and finally performs the independent action a2, that is, goes straight at the intersection. It can be learned that the vehicle 1 and the vehicle 2 are both in the intermediate state S1 (that is, the vehicle 1 turns left at the intersection, and the vehicle 2 goes straight at the intersection).

After the vehicle 1 and the vehicle 2 are in the intermediate state S1, the vehicle 1 may take a new photo, where the photo indicates that the vehicle 1 and the vehicle 2 are in the intermediate state S1. In this case, after the vehicle 1 inputs the new photo into the generative flow model of the vehicle 1, the generative flow model may process the photo, to obtain traffic of a joint action a3a4 between the vehicle 1 and the vehicle 2 (which may also be referred to as an occurrence probability of the joint action a3a4).

The joint action a3a4 includes an independent action a3 of the vehicle 1 and an independent action a4 of the vehicle 2, and the joint action a3a4 is used to enable the vehicle 1 and the vehicle 2 to directly enter an intermediate state node S3 from the intermediate state node S1. In addition, the traffic of the joint action a3a4 is output traffic of the intermediate state node S1, and the traffic of the joint action a3a4 is input traffic of the intermediate state node S3.

Because the traffic of the joint action a3a4 is the largest, the vehicle 1 may perform the independent action a3. Similarly, the vehicle 2 also performs action prediction similar to that of the vehicle 1, and finally performs the independent action a4. It can be learned that the vehicle 1 and the vehicle 2 are both in the intermediate state S3.

The foregoing operations are repeated, until the vehicle 1 and the vehicle 2 are in a terminal state node. For example, the vehicle 1 and the vehicle 2 continue to perform a state transition (to be specific, perform action prediction and action execution) from the intermediate state node S3, finally arrive at a terminal state node S13 through an intermediate state node S7 and an intermediate state node S 10, and no longer perform a state transition.

It should be understood that, in this embodiment, the independent action of the first agent may be understood as the action of the first agent, and similarly, an independent action of the second agent may be understood as the action of the second agent.

It should be further understood that this embodiment is described by using only two agents as an example. The method provided in this application may be further applied to action prediction and action execution of more agents, for example, three agents, four agents, or five agents. This is not limited herein.

In this embodiment of this application, after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes the action of the first agent and the action of the second agent. In this way, the first agent completes action prediction for the first state. In the foregoing process, because the state information of the first agent indicates information related to the first agent and the second agent, when predicting the action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

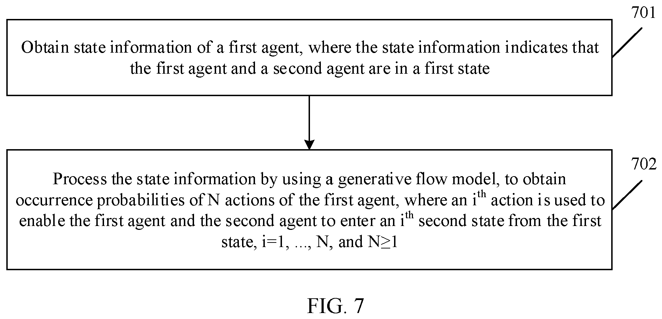

FIG. 7 is a schematic flowchart of an action prediction method according to an embodiment of this application. As shown in FIG. 7, the method includes the following steps.

701: Obtain state information of a first agent, where the state information indicates that the first agent and a second agent are in a first state.

For descriptions of step 701, refer to a related description part of step 501 in the embodiment shown in FIG. 5. Details are not described herein again.

702: Process the state information by using a generative flow model, to obtain occurrence probabilities of N actions of the first agent, where an $i^{th}$ action is used to enable the first agent and the second agent to enter an $i^{th}$ second state from the first state, i=1, ..., N, and N≥1.

After obtaining the state information of the first agent, the first agent may input the state information of the first agent into a generative flow model disposed on the first agent, to perform processing (for example, a series of feature extraction processing) on the state information of the first agent by using the generative flow model. In this way, occurrence probabilities of N independent actions (N is a positive integer greater than or equal to 1) of the first agent are obtained.

For any one of the N independent actions, namely, for an $i^{th}$ independent action, the $i^{th}$ independent action is used to enable the first agent and the second agent to enter the $i^{th}$ second state from the first state in the environment. In this way, the first agent completes action prediction for the first state. Herein, i=1, ..., N.

In this way, the first agent may select an independent action with a highest occurrence probability from the N independent actions, and perform the independent action, to enter a second state in N second states. In this way, the first agent completes action execution for the first state.

Then, because the first agent and the second agent are in a second state in the environment, the first agent may collect new state information from the environment. The new state information indicates that the first agent and the second agent are in the second state in the environment. The first agent may process the new state information by using the generative flow model of the first agent, to complete action prediction for the second state and action execution for the second state (for this process, reference may be made to related descriptions of action prediction for the first state and action execution for the first state, and details are not described herein), and action prediction and action execution are not stopped until a terminal state is entered.

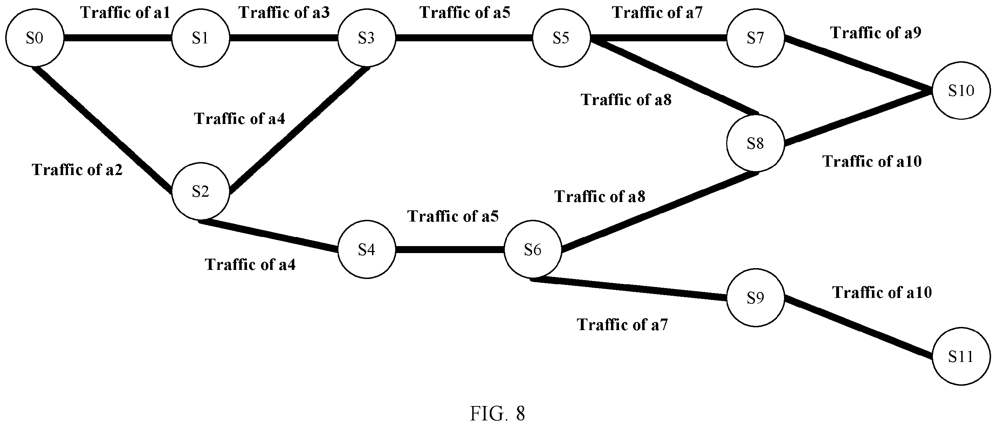

Still as shown in the foregoing example, as shown in FIG. 8 (FIG. 8 is a diagram of another structure of a generative flow model according to an embodiment of this application), after a vehicle 1 inputs the photo taken by the vehicle 1 into the generative flow model of the vehicle 1, the generative flow model may determine, based on the photo, that the vehicle 1 and a vehicle 2 are in an initial state node S0 (that is, the vehicle 1 and the vehicle 2 are in an initial state S0), and the generative flow model may process the photo, to obtain traffic of an independent action a1 (which may also be referred to as an occurrence probability of the independent action a1) of the vehicle 1 and traffic of an independent action a2 of the vehicle 1.

The independent action a1 of the vehicle 1 is used to enable the vehicle 1 and the vehicle 2 to directly enter an intermediate state node S1 from the initial state node S0 (which may also be referred to as that the independent action a1 of the vehicle 1 flows out from the initial state node S0 and flows into the intermediate state node S1), and the independent action a2 of the vehicle 1 is used to enable the vehicle 1 and the vehicle 2 to directly enter an intermediate state node S2 from the initial state node S0. In addition, a sum of the traffic of the independent action a1 of the vehicle 1 and the traffic of the independent action a2 of the vehicle 1 is output traffic of the initial state node S0, the traffic of the independent action a1 of the vehicle 1 is input traffic of the intermediate state node S1, and the traffic of the independent action a2 of the vehicle 1 is input traffic of the intermediate state node S2.

It is assumed that the traffic of the independent action a1 of the vehicle 1 is greater than the traffic of the independent action a2 of the vehicle 1. In this case, the vehicle 1 may select the independent action a1, and perform the independent action a1. Similarly, the vehicle 2 also performs action prediction similar to that of the vehicle 1, and finally performs an independent action a2 of the vehicle 2. It can be learned that the vehicle 1 and the vehicle 2 are both in the intermediate state S1.

After the vehicle 1 and the vehicle 2 are in the intermediate state S1, the vehicle 1 may take a new photo, where the photo indicates that the vehicle 1 and the vehicle 2 are in the intermediate state S1. In this case, after the vehicle 1 inputs the new photo into the generative flow model of the vehicle 1, the generative flow model may process the photo, to obtain traffic of an independent action a3 of the vehicle 1 (which may also be referred to as an occurrence probability of the independent action a3 of the vehicle 1).

The independent action a3 of the vehicle 1 is used to enable the vehicle 1 and the vehicle 2 to directly enter an intermediate state node S3 from the intermediate state node S1. In addition, the traffic of the independent action a3 of the vehicle 1 is output traffic of the intermediate state node S1, and the traffic of the independent action a3 of the vehicle 1 is input traffic of the intermediate state node S3.

Because the traffic of the independent action a3 of the vehicle 1 is the largest, the vehicle 1 may perform the independent action a3 of the vehicle 1. Similarly, the vehicle 2 also performs action prediction similar to that of the vehicle 1, and finally performs an independent action a4 of the vehicle 2. It can be learned that the vehicle 1 and the vehicle 2 are both in the intermediate state S3.

The foregoing operations are repeated, until the vehicle 1 and the vehicle 2 are in a terminal state node. For example, the vehicle 1 and the vehicle 2 continue to perform a state transition (to be specific, perform independent action prediction and independent action execution) from the intermediate state node S3, finally arrive at a terminal state node S13 through an intermediate state node S7 and an intermediate state node S10, and no longer perform a state transition.

It should be understood that, in this embodiment, the independent action of the first agent may be understood as the action of the first agent, and similarly, an independent action of the second agent may be understood as the action of the second agent.

It should be further understood that this embodiment is described by using only two agents as an example. The method provided in this application may be further applied to action prediction and action execution of more agents, for example, three agents, four agents, or five agents. This is not limited herein.

In this embodiment of this application, after obtaining the state information indicating that the first agent and the second agent are in the first state, the first agent may process the state information by using the generative flow model, to obtain the occurrence probabilities of the N actions of the first agent. The $i^{th}$ action in the N actions is used to enable the first agent and the second agent to enter the $i^{th}$ second state from the first state. In this way, the first agent completes action prediction for the first state. In the foregoing process, because the state information of the first agent indicates information related to the first agent and the second agent, when predicting the action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

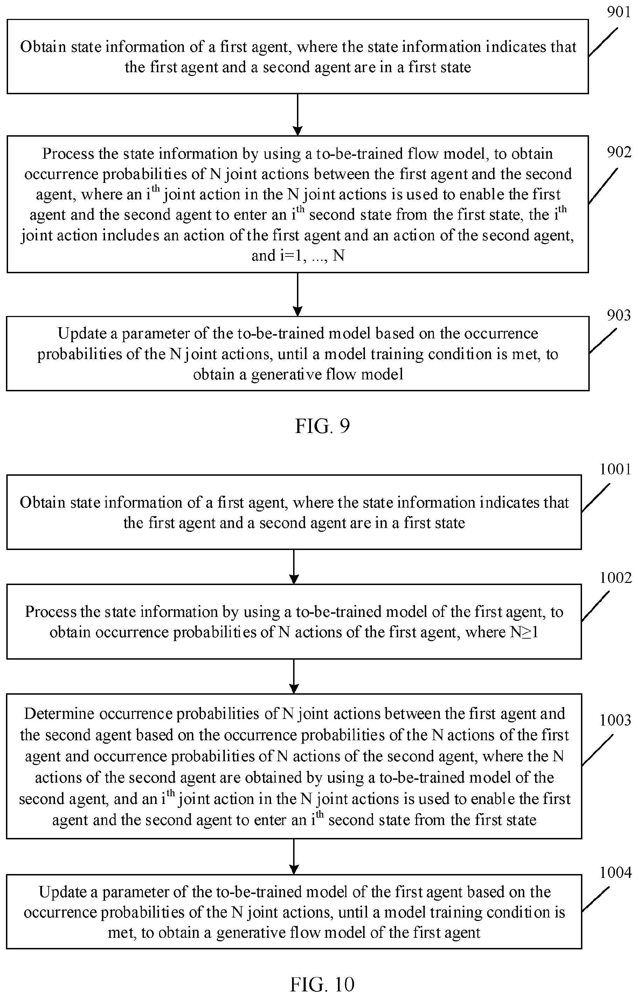

The foregoing describes in detail the action prediction method provided in embodiments of this application. The following describes a model training method provided in embodiments of this application. FIG. 9 is a schematic flowchart of a model training method according to an embodiment of this application. As shown in FIG. 9, the method includes the following steps.

901: Obtain state information of a first agent, where the state information indicates that the first agent and a second agent are in a first state.

In this embodiment, when a to-be-trained model (namely, a neural network model that needs to be trained) needs to be trained, a batch of training data may be obtained. The batch of training data includes the state information of the first agent, and the state information indicates that the first agent and the second agent are in the first state (which is usually an intermediate state in the to-be-trained model). It should be noted that a reward value corresponding to the first state is known.

In a possible implementation, the state information of the first agent is information collected when the first agent is in the first state, and the information includes at least one of the following: an image, a video, an audio, or a text.

For descriptions of step 901, refer to a related description part of step 501 in the embodiment shown in FIG. 5. Details are not described herein again.

902: Process the state information by using a to-be-trained flow model, to obtain occurrence probabilities of N joint actions between the first agent and the second agent, where an $i^{th}$ joint action in the N joint actions is used to enable the first agent and the second agent to enter an $i^{th}$ second state from the first state, the $i^{th}$ joint action includes an action of the first agent and an action of the second agent, and i=1, ..., N.

After the state information of the first agent is obtained, the first agent may input the state information of the first agent into a generative flow model of the first agent, to process the state information by using the to-be-trained model. In this way, occurrence probabilities of N joint actions (in the following, the N joint actions are referred to as N joint actions flowing out from the first state) between the first agent and the second agent are obtained. An $i^{th}$ joint action flowing out from the first state in the N joint actions flowing out from the first state is used to enable the first agent and the second agent to enter an $i^{th}$ second state from the first state, and the $i^{th}$ joint action flowing out from the first state includes an $i^{th}$ independent action in N independent actions of the first agent and an $i^{th}$ independent action in N independent actions of the second agent. Herein, i=1, ..., N.

For descriptions of step 902, refer to a related description part of step 502 in the embodiment shown in FIG. 5. Details are not described herein again.

903: Update a parameter of the to-be-trained model based on the occurrence probabilities of the N joint actions, until a model training condition is met, to obtain a generative flow model.

After the occurrence probabilities of the N joint actions flowing out from the first state are obtained, the first agent may further obtain the occurrence probabilities of the M joint actions (namely, the M joint actions between the first agent and the second agent, and M is a positive integer greater than or equal to 1) flowing into the first state. It should be noted that a $j^{th}$ joint action flowing into the first state in the M joint actions flowing into the first state is obtained by separately processing j pieces of previous state information of the first agent by using the to-be-trained model, and the j pieces of previous state information of the first agent indicate that the first agent and the second agent are in a $j^{th}$ third state (namely, a previous state of the first state in the to-be-trained model). It can be learned that the $j^{th}$ joint action flowing into the first state is used to enable the first agent and the second agent to enter the first state from the $j^{th}$ third state, where j=1, ..., M.

In this case, the occurrence probabilities of the M joint actions flowing into the first state, the occurrence probabilities of the N joint actions flowing out from the first state, and the reward value (for example, the reward value is 0) corresponding to the first state may be calculated by using a preset loss function (flow matching is a constraint target), to obtain a loss corresponding to the first state. The loss indicates a difference between a sum of the occurrence probabilities of the M joint actions flowing into the first state and a sum of the occurrence probabilities of the N joint actions flowing out from the first state.

Because the first state is an intermediate state in the to-be-trained model, for the other intermediate states in the to-be-trained model, the first agent may also perform, on the other intermediate states, an operation similar to that performed for the first state. Therefore, losses (including the loss corresponding to the first state) corresponding to all intermediate states can be finally obtained.

It should be noted that, for any terminal state in the to-be-trained model, occurrence probabilities of all joint actions flowing into the terminal state and a reward value (which is known and is usually not 0) corresponding to the terminal state may be calculated by using the preset loss function, to obtain a loss corresponding to the terminal state (the loss indicates a difference between a sum of the occurrence probabilities of all the joint actions flowing into the terminal state and the reward value corresponding to the terminal state). For the other terminal states in the to-be-trained model, the first agent may also perform, on the other terminal states, an operation similar to that performed for the terminal state, and therefore, losses corresponding to all terminal states may be finally obtained.

In this case, the losses corresponding to all the intermediate states and the losses corresponding to all the terminal states may be superposed, to obtain a target loss.

For example, still as shown in the example in FIG. 6, for any state node other than an initial state node in the generative flow model, input traffic of the state node is:

$$F(s_k) = \sum_{i=1}^{N} F(s_k, aa_i) \tag{2}$$

In the foregoing formula, $s_k$ is the state node, $aa_i$ is an $i^{th}$ joint action flowing into the state node $s_k$, $F(s_k, aa_i)$ is traffic of the $i^{th}$ joint action flowing into the state node $s_k$, and $N$ is a quantity of all joint actions that flow into the state node $s_k$. For example, input traffic of an intermediate state node S3 is a sum of traffic of a joint action a3a4 and traffic of a joint action a4a4, and input traffic of a terminal state node S10 is a sum of traffic of a joint action a9a10 and traffic of a joint action a10a10.

The input traffic of the state node is as follows:

$$F(s_k) = \sum_{j=1}^{M} F(s_k, aa'_j) \tag{3}$$

In the foregoing formula, $aa'_j$ is a $j^{th}$ joint action flowing out of the state node $s_k$, $F(s_k, aa'_j)$ is traffic of the $j^{th}$ joint action flowing out of the state node $s_k$, and $M$ is a quantity of all joint actions flowing out of the state node $s_k$. For example, output traffic of the intermediate state node S3 is traffic of a joint action a5a6, output traffic of an intermediate state node S5 is a sum of traffic of a joint action a7a8 and traffic of a joint action a8a8, and a terminal state node S10 has no output traffic.

A sum of losses of all state nodes other than the initial state node, namely, the target loss is:

$$L = \sum_{k=1}^{P} (\sum_{i=1}^{N} F(s_k, aa_i) - R(s_k) - \sum_{j=1}^{M} F(s_k, aa'_j)) \tag{4}$$

In the foregoing formula, $R(s_k)$ is a reward value of the state node $s_k$, P is a quantity of all the state nodes other than the initial state node, and if the state node $s_k$ is an intermediate state node, $R(s_k)$ is 0; or if the state node $s_k$ is a terminal state node, $\sum_{j=1}^{M} F(s_k, aa'_j)$ is 0.

After the target loss is obtained, a parameter of the to-be-trained model may be updated based on the target loss, and the to-be-trained model obtained after the parameter is updated continues to be trained by using a next batch of training data, until the model training condition is met (for example, the target loss converges), to obtain the generative flow model in the embodiment shown in FIG. 5.

The generative flow model obtained through training in this embodiment of this application has a function of predicting an action of an agent. Specifically, after obtaining the state information indicating that the first agent and the second agent are in the first state, the first agent may process the state information by using the generative flow model, to obtain the occurrence probabilities of the N joint actions between the first agent and the second agent. The $i^{th}$ joint action in the N joint actions is used to enable the first agent and the second agent to enter the $i^{th}$ second state from the first state, and the $i^{th}$ joint action includes an action of the first agent and an action of the second agent. In this way, the first agent completes action prediction for the first state. In the foregoing process, because the state information of the first agent indicates information related to the first agent and the second agent, when predicting the action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

FIG. 10 is a schematic flowchart of a model training method according to an embodiment of this application. As shown in FIG. 10, the method includes the following steps.

1001: Obtain state information of a first agent, where the state information indicates that the first agent and a second agent are in a first state.

In this embodiment, when a to-be-trained model of the first agent (namely, a neural network model that needs to be trained in the first agent) needs to be trained, a batch of training data may be obtained. The batch of training data includes the state information of the first agent, and the state information indicates that the first agent and the second agent are in the first state (which is usually an intermediate state in the to-be-trained model). It should be noted that a reward value corresponding to the first state is known.

In a possible implementation, the state information of the first agent is information collected when the first agent is in the first state, and the information includes at least one of the following: an image, a video, an audio, or a text.

For descriptions of step 1001, refer to a related description part of step 701 in the embodiment shown in FIG. 7. Details are not described herein again.

1002: Process the state information by using a to-be-trained model of the first agent, to obtain occurrence probabilities of N actions of the first agent, where $N \geq 1$.

After the state information of the first agent is obtained, the first agent may input the state information of the first agent into a generative flow model of the first agent, to process the state information by using the to-be-trained model. In this way, occurrence probabilities of N independent actions of the first agent (in the following, the N independent actions of the first agent are referred to as N independent actions of the first agent that flow out from the first state) are obtained, and in the N independent actions of the first agent that flow out from the first state, an $i^{th}$ independent action that is of the first agent and that flows out from the first state is used to enable the first agent and the second agent to enter an $i^{th}$ second state from the first state. Herein, i=1, ..., N.

For descriptions of step 1002, refer to a related description part of step 702 in the embodiment shown in FIG. 7. Details are not described herein again.

1003: Determine occurrence probabilities of N joint actions between the first agent and the second agent based on the occurrence probabilities of the N actions of the first agent and occurrence probabilities of N actions of the second agent, where the N actions of the second agent are obtained by using a to-be-trained model of the second agent, and an $i^{th}$ joint action in the N joint actions is used to enable the first agent and the second agent to enter the $i^{th}$ second state from the first state.

1004: Update a parameter of the to-be-trained model of the first agent based on the occurrence probabilities of the N joint actions, until a model training condition is met, to obtain the generative flow model of the first agent.

After obtaining the occurrence probabilities of the N independent actions of the first agent that flow out from the first state, the first agent may further obtain, from the second agent, the occurrence probabilities of the N independent actions of the second agent that flow out from the first state. The occurrence probabilities of the N independent actions of the second agent that flow out from the first state are obtained by using the to-be-trained model of the second agent (for the process, refer to step 1002, and details are not described herein again). In the N joint actions of the second agent that flow out from the first state, the $i^{th}$ independent action that is of the second agent and that flows out from the first state is used to enable the first agent and the second agent to enter the $i^{th}$ second state from the first state.

Then, the first agent may calculate the occurrence probabilities of the N independent actions of the first agent that flow from the first state and the occurrence probabilities of the N independent actions of the second agent that flow from the first state, to obtain occurrence probabilities of N joint actions flowing from the first state. An $i^{th}$ joint action flowing from the first state in the N joint actions flowing from the first state is used to enable the first agent and the second agent to enter the $i^{th}$ second state from the first state.

Then, the first agent may further obtain occurrence probabilities of M joint actions (namely, the M joint actions between the first agent and the second agent, and M is a positive integer greater than or equal to 1) flowing into the first state. It should be noted that the occurrence probabilities of the M joint actions flowing into the first state are obtained based on occurrence probabilities of M independent actions of the first agent that flow into the first state and occurrence probabilities of M independent actions of the second agent that flow into the first state (for sources of these probabilities, refer to the foregoing process, and details are not described herein again). It can be learned that a $j^{th}$ joint action flowing into the first state is used to enable the first agent and the second agent to enter the first state from a $j^{th}$ third state (namely, a previous state of the first state in the to-be-trained model). Herein, j=1, ..., M.

In this case, the first agent may calculate the occurrence probabilities of the M joint actions flowing into the first state, the occurrence probabilities of the N joint actions flowing out from the first state, and the reward value (for example, the reward value is 0) corresponding to the first state by using a preset loss function (flow matching is a constraint target), to obtain a loss corresponding to the first state. The loss indicates a difference between a sum of the occurrence probabilities of the M joint actions flowing into the first state and a sum of the occurrence probabilities of the N joint actions flowing out from the first state.

Because the first state is an intermediate state in the to-be-trained model, for the other intermediate states in the to-be-trained model, the first agent may also perform, on the other intermediate states, an operation similar to that performed for the first state. Therefore, losses (including the loss corresponding to the first state) corresponding to all intermediate states can be finally obtained.

It should be noted that, for any terminal state in the to-be-trained model, occurrence probabilities of all joint actions flowing into the terminal state and a reward value (which is known and is usually not 0) corresponding to the terminal state may be calculated by using the preset loss function, to obtain a loss corresponding to the terminal state (the loss indicates a difference between a sum of the occurrence probabilities of all the joint actions flowing into the terminal state and the reward value corresponding to the terminal state). For the other terminal states in the to-be-trained model, the first agent may also perform, on the other terminal states, an operation similar to that performed for the terminal state, and therefore, losses corresponding to all terminal states may be finally obtained.

In this case, the losses corresponding to all the intermediate states and the losses corresponding to all the terminal states may be superposed, to obtain a target loss.

For example, still as shown in the example in FIG. 8, for any state node other than an initial state node in the generative flow model, input traffic of the state node is:

$$F(s_k, aa_i) = \exp(\sum_{t=1}^{Q} \log F_t(s_k, a_i) - A)$$

$$F(s_k) = \sum_{i=1}^{N} F(s_k, aa_i)$$

(5)

In the foregoing formula, $s_k$ is the state node, $F_t(s_k, a_i)$ is traffic of an $i^{th}$ independent action that is of a $t^{th}$ agent and that flows into the state node $s_k$, Q is a quantity of agents, $F(s_k, aa_i)$ is traffic of an $i^{th}$ joint action flowing into the state node $s_k$, A is a constant, and $F(s_k)$ is input traffic of the state node $s_k$. For example, for an intermediate state node S3, traffic of a joint action a3a4 is calculated based on traffic of an independent action a3 of a vehicle 1 and traffic of an independent action a4 of a vehicle 2, and traffic of a joint action a4a4 is calculated based on traffic of an independent action a4 of the vehicle 1 and traffic of an independent action a4 of the vehicle 2. Input traffic of the intermediate state node S3 is a sum of the traffic of the joint action a3a4 and the traffic of the joint action a4a4.

$$F(s_k, aa'_j) = \exp(\sum_{t=1}^{Q} \log F_t(s_k, a'_j) - B)$$

$$F(s_k) = \sum_{i=1}^{M} F(s_k, aa'_j)$$

(6)

In the foregoing formula, $F_t(s_k, a'_j)$ is traffic of a $j^{th}$ independent action that is of the $t^{th}$ agent and that flows out of the state node $s_k$, $F(s_k, aa'_j)$ is traffic of a $j^{th}$ joint action flowing out of the state node $s_k$, and B is a constant. For example, for the intermediate state node S3, traffic of a joint action a5a6 is calculated based on traffic of an independent action a5 of the vehicle 1 and traffic of an independent action a6 of the vehicle 2, and output traffic of the intermediate state node S3 is traffic of the joint action a5a6.

A sum of losses of all state nodes other than the initial state node, namely, the target loss is shown in Formula (4).

After the target loss is obtained, a parameter of the to-be-trained model of the first agent may be updated based on the target loss, and the to-be-trained model obtained after the parameter is updated continues to be trained by using a next batch of training data, until the model training condition is met (for example, the target loss converges), to obtain the generative flow model of the first agent in the embodiment shown in FIG. 7.

The generative flow model obtained through training in this embodiment of this application has a function of predicting an action of an agent. Specifically, after obtaining the state information indicating that the first agent and the second agent are in the first state, the first agent may process the state information by using the generative flow model, to obtain the occurrence probabilities of the N actions of the first agent. An $i^{th}$ action in the N actions is used to enable the first agent and the second agent to enter the $i^{th}$ second state from the first state. In this way, the first agent completes action prediction for the first state. In the foregoing process, because the state information of the first agent indicates information related to the first agent and the second agent, when predicting the action of the first agent based on the state information, the generative flow model not only considers information about the first agent, but also considers information about the second agent and a relationship between the two agents. Comprehensive factors are considered. The action predicted in such a new manner is accurate (more practical), so that after performing the predicted action, the first agent can obtain a maximum reward or achieve a specific goal.

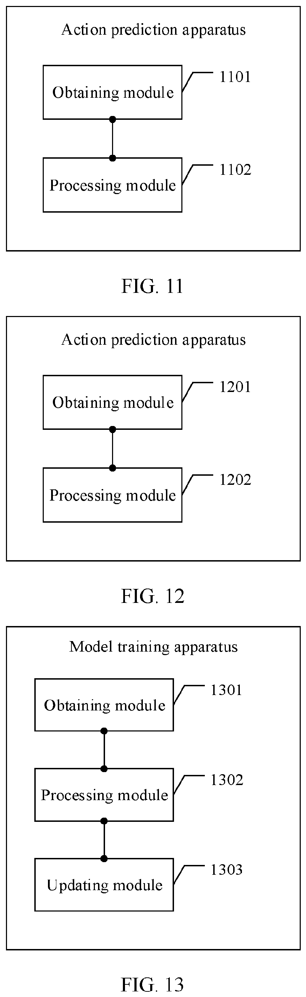

The foregoing describes in detail the model training method provided in embodiments of this application. The following describes an action prediction apparatus and a model training apparatus provided in embodiments of this application. FIG. 11 is a diagram of a structure of an action prediction apparatus according to an embodiment of this application. As shown in FIG. 11, the apparatus includes:

an obtaining module 1101, configured to obtain state information of a first agent, where the state information indicates that the first agent and a second agent are in a first state; and

a processing module 1102, configured to process the state information by using a generative flow model, to obtain occurrence probabilities of N joint actions between the first agent and the second agent, where an $i^{th}$ joint action is used to enable the first agent and the second agent to enter an $i^{th}$ second state from the first state, the $i^{th}$ joint action includes an action of the first agent and an action of the second agent, i=1, ..., N, and N≥1.

In a possible implementation, the state information is information collected when the first agent is in the first state, and the information includes at least one of the following: an image, a video, an audio, or a text.

In a possible implementation, the processing module 1102 is configured to: select a joint action with a highest occurrence probability from the N joint actions; and perform an action that is of the first agent and that is included in the joint action with the highest occurrence probability.

FIG. 12 is a diagram of another structure of an action prediction apparatus according to an embodiment of this application. As shown in FIG. 12, the apparatus includes:

an obtaining module 1201, configured to obtain state information of a first agent, where the state information indicates that the first agent and a second agent are in a first state; and

a processing module 1202, configured to process the state information by using a generative flow model, to obtain occurrence probabilities of N actions of the first agent, where an $i^{th}$ action is used to enable the first agent and the second agent to enter an $i^{th}$ second state from the first state, i=1, ..., N, and N≥1.

In a possible implementation, the state information is information collected when the first agent is in the first state, and the information includes at least one of the following: an image, a video, an audio, or a text.

In a possible implementation, the processing module 1202 is configured to: select an action with a highest occurrence probability from the N actions; and perform the action with the highest occurrence probability.

FIG. 13 is a diagram of a structure of a model training apparatus according to an embodiment of this application. As shown in FIG. 13, the apparatus includes:

an obtaining module 1301, configured to obtain state information of a first agent, where the state information indicates that the first agent and a second agent are in a first state;

a processing module 1302, configured to process the state information by using a to-be-trained flow model, to obtain occurrence probabilities of N joint actions between the first agent and the second agent, where an $i^{th}$ joint action in the N joint actions is used to enable the first agent and the second agent to enter an $i^{th}$ second state from the first state, the $i^{th}$ joint action includes an action of the first agent and an action of the second agent, and i=1, ..., N; and

an updating module 1303, configured to update a parameter of the to-be-trained model based on the occurrence probabilities of the N joint actions, until a model training condition is met, to obtain a generative flow model.

In a possible implementation, the state information is information collected when the first agent is in the first state, and the information includes at least one of the following: an image, a video, an audio, or a text.

In a possible implementation, the updating module 1303 is configured to: determine a target loss based on occurrence probabilities of M joint actions between the first agent and the second agent, the occurrence probabilities of the N joint actions, and a reward value corresponding to the first state, where a $j^{th}$ joint action in the M joint actions is used to enable the first agent and the second agent to enter the first state from a $j^{th}$ third state, j=1, ..., M, and M≥1; and update the parameter of the to-be-trained model based on the target loss, until the model training condition is met, to obtain the generative flow model.

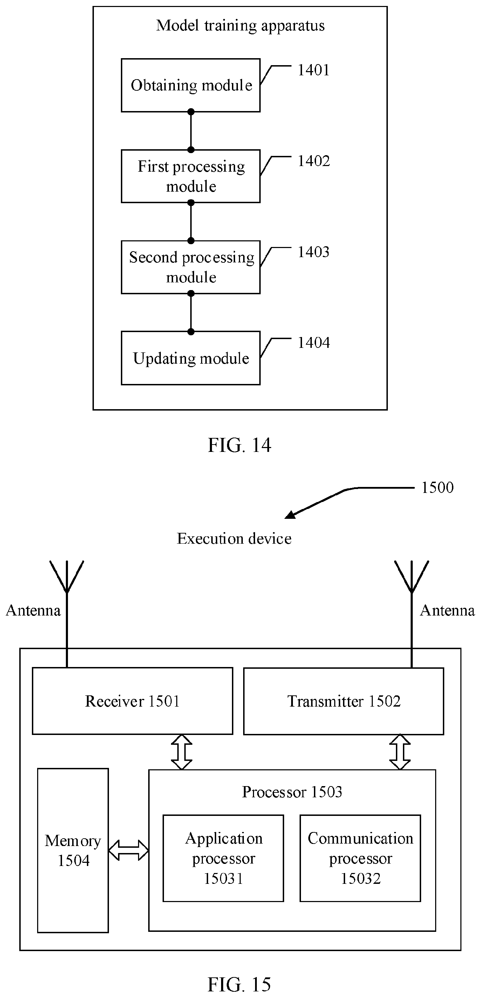

FIG. 14 is a diagram of another structure of a model training apparatus according to an embodiment of this application. As shown in FIG. 14, the apparatus includes:

an obtaining module 1401, configured to obtain state information of a first agent, where the state information indicates that the first agent and a second agent are in a first state;

a first processing module 1402, configured to process the state information by using a to-be-trained model of the first agent, to obtain occurrence probabilities of N actions of the first agent, where $N \geq 1$;

a second processing module 1403, configured to determine the occurrence probabilities of the N joint actions between the first agent and the second agent based on the occurrence probabilities of the N actions of the first agent and occurrence probabilities of N actions of the second agent, where the N actions of the second agent are obtained by using a to-be-trained model of the second agent, and the $i^{th}$ joint action in the N joint actions is used to enable the first agent and the second agent to enter the $i^{th}$ second state from the first state; and

an updating module 1404, configured to update a parameter of the to-be-trained model of the first agent based on the occurrence probabilities of the N joint actions, until a model training condition is met, to obtain the generative flow model of the first agent.

In a possible implementation, the state information is information collected when the first agent is in the first state, and the information includes at least one of the following: an image, a video, an audio, or a text.

In a possible implementation, the updating module 1404 is configured to: determine a target loss based on occurrence probabilities of M joint actions between the first agent and the second agent, the occurrence probabilities of the N joint actions, and a reward value corresponding to the first state, where a $j^{th}$ joint action in the M joint actions is used to enable the first agent and the second agent to enter the first state from a $j^{th}$ third state, j=1, ..., M, and $M \geq 1$; and update the parameter of the to-be-trained model of the first agent based on the target loss, until the model training condition is met, to obtain the generative flow model of the first agent.

It should be noted that, content such as information exchange between the modules/units of the apparatuses and an execution process is based on the same concept as the method embodiments of this application, and produces the same technical effect as those of the method embodiments of this application. For specific content, refer to the foregoing descriptions in the method embodiments of this application. Details are not described herein again.

An embodiment of this application further relates to an execution device. FIG. 15 is a diagram of a structure of an execution device according to an embodiment of this application. As shown in FIG. 15, an execution device 1500 may be specifically represented as a mobile phone, a tablet computer, a notebook computer, an intelligent wearable device, a server, or the like. This is not limited herein. The action prediction apparatus described in the embodiment corresponding to FIG. 11 or FIG. 12 may be deployed on the execution device 1500, and is configured to implement an action prediction function in the embodiment corresponding to FIG. 5 or FIG. 7. Specifically, the execution device 1500 includes a receiver 1501, a transmitter 1502, a processor 1503, and a memory 1504 (there may be one or more processors 1503 in the execution device 1500, and one processor is used as an example in FIG. 15). The processor 1503 may include an application processor 15031 and a communication processor 15032. In some embodiments of this application, the receiver 1501, the transmitter 1502, the processor 1503, and the memory 1504 may be connected through a bus or in another manner.

The memory 1504 may include a read-only memory and a random access memory, and provide instructions and data to the processor 1503. A part of the memory 1504 may further include a nonvolatile random access memory (nonvolatile random access memory, NVRAM). The memory 1504 stores a processor and operation instructions, an executable module or a data structure, a subnet thereof, or an extended set thereof. The operation instructions may include various operation instructions to implement various operations.

The processor 1503 controls an operation of the execution device. In a specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiment of this application may be applied to the processor 1503, or implemented by the processor 1503. The processor 1503 may be an integrated circuit chip, and has a signal processing capability. In an implementation process, steps in the foregoing methods may be implemented by using a hardware integrated logic circuit in the processor 1503, or by using instructions in a form of software. The processor 1503 may be a general-purpose processor, a digital signal processor (digital signal processor, DSP), a microprocessor, or a microcontroller. The processor 1503 may further include an application-specific integrated circuit (application-specific integrated circuit, ASIC), a field programmable gate array (field programmable gate array, FPGA) or another programmable logic device, a discrete gate, or a transistor logic device, or a discrete hardware component. The processor 1503 may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. A software module may be located in a mature storage medium in the art, such as a random access memory, a flash memory, a read-only memory, a programmable read-only memory, an electrically erasable programmable memory, or a register. The storage medium is located in the memory 1504, and the processor 1503 reads information in the memory 1504 and completes the steps in the foregoing methods in combination with hardware in the processor 1503.

The receiver 1501 may be configured to receive input digital or character information, and generate a signal input related to a related setting and function control of the execution device. The transmitter 1502 may be configured to output digital or character information through a first interface. The transmitter 1502 may be further configured to send instructions to a disk group through the first interface, to modify data in the disk group. The transmitter 1502 may further include a display device such as a display.

In this embodiment of this application, in one case, the processor 1503 is configured to predict an action of an agent by using the generative flow model in the embodiment corresponding to FIG. 5 or FIG. 7.

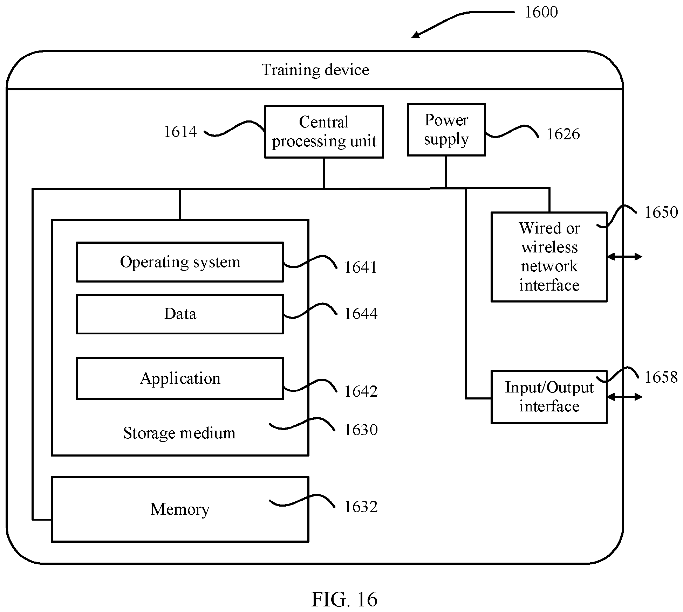

An embodiment of this application further relates to a training device. FIG. 16 is a diagram of a structure of a training device according to an embodiment of this application. As shown in FIG. 16, a training device 1600 is implemented by one or more servers. The training device 1600 may greatly differ due to different configurations or performance, and may include one or more central processing units (central processing units, CPUs) 1614 (for example, one or more processors), a memory 1632, one or more storage media 1630 (for example, one or more mass storage devices) that store an application 1642 or data 1644. The memory 1632 and the storage medium 1630 may be transient storage or persistent storage. A program stored in the storage medium 1630 may include one or more modules (not shown in the figure), and each module may include a series of instruction operations performed on the training device. Further, the central processing unit 1614 may be configured to: communicate with the storage medium 1630, and perform the series of instruction operations in the storage medium 1630 on the training device 1600.

The training device 1600 may further include one or more power supplies 1626, one or more wired or wireless network interfaces 1650, one or more input/output interfaces 1658, and/or one or more operating systems 1641, for example, Windows ServerTM, Mac OS XTM, UnixTM, LinuxTM, and FreeBSDTM.

Specifically, the training device may perform the model training method in the embodiment corresponding to FIG. 9 or FIG. 10.

An embodiment of this application further relates to a computer storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device provided in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in an execution device performs the data processing method described in embodiments, or a chip in a training device performs the data processing method described in embodiments. Optionally, the storage unit is a storage unit in the chip, for example, a register or a buffer. Alternatively, the storage unit may be a storage unit in a wireless access device but outside the chip, for example, a read-only memory (read-only memory, ROM), another type of static storage device that can store static information and instructions, or a random access memory (random access memory, RAM).

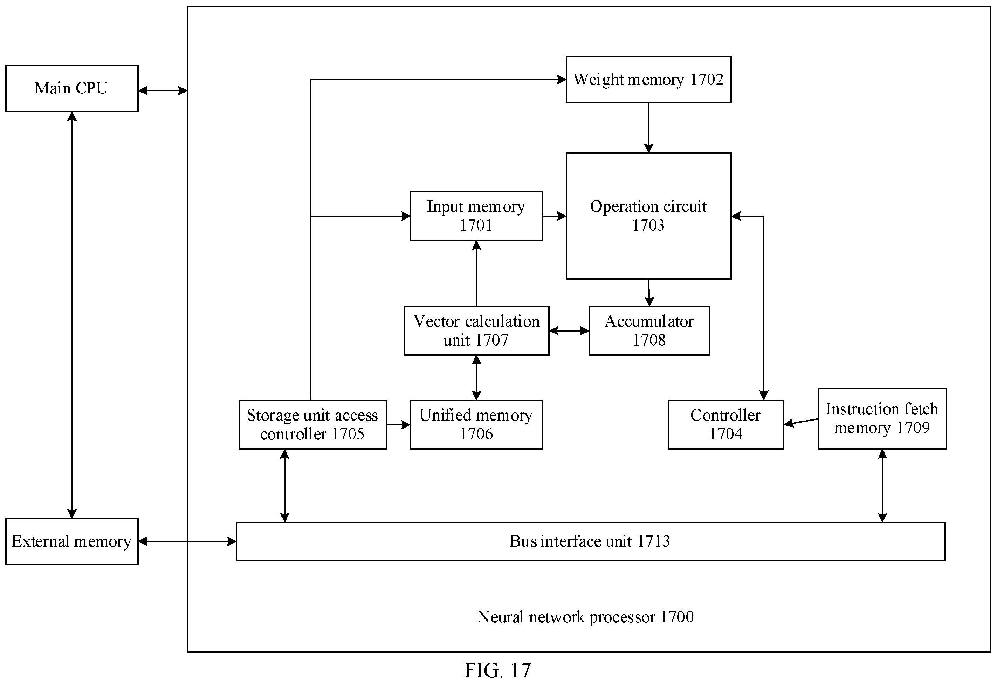

Specifically, FIG. 17 is a diagram of a structure of a chip according to an embodiment of this application. The chip may be represented as a neural-network process unit NPU 1700. The NPU 1700 is mounted to a host CPU (Host CPU) as a coprocessor, and the host CPU assigns a task. A core part of the NPU is an operation circuit 1703. A controller 1704 controls the operation circuit 1703 to extract matrix data in a memory and performs a multiplication operation.

In some implementations, the operation circuit 1703 includes a plurality of processing units (Process Engine, PE) inside. In some implementations, the operation circuit 1703 is a two-dimensional systolic array. The operation circuit 1703 may alternatively be a one-dimensional systolic array or another electronic circuit capable of performing mathematical operations such as multiplication and addition. In some implementations, the operation circuit 1703 is a general-purpose matrix processor.

For example, it is assumed that there is an input matrix A, a weight matrix B, and an output matrix C. The operation circuit fetches data corresponding to the matrix B from a weight memory 1702, and caches the data on each PE in the operation circuit. The operation circuit fetches data of the matrix A from an input memory 1701, performs a matrix operation with the matrix B, to obtain a partial result or a final result of a matrix, and stores the result in an accumulator (accumulator) 1708.

A unified memory 1706 is configured to store input data and output data. Weight data is directly transferred to the weight memory 1702 through a storage unit access controller (Direct Memory Access Controller, DMAC) 1705. The input data is also transferred to the unified memory 1706 through the DMAC.

A BIU is a bus interface unit, namely, a bus interface unit 1713, and is configured to perform interaction between an AXI bus, and the DMAC and an instruction fetch buffer (Instruction Fetch Buffer, IFB) 1709.

The bus interface unit (Bus Interface Unit, BIU for short) 1713 is used by the instruction fetch buffer 1709 to obtain instructions from an external memory, and is further used by the storage unit access controller 1705 to obtain original data of the input matrix A or the weight matrix B from the external memory.

The DMAC is mainly configured to: transfer input data in the external memory DDR to the unified memory 1706, transfer weight data to the weight memory 1702, or transfer input data to the input memory 1701.

A vector calculation unit 1707 includes a plurality of operation processing units, and when necessary, performs further processing on an output of the operation circuit 1703, for example, vector multiplication, vector addition, exponential operation, logarithm operation, and size comparison. The vector calculation unit 1707 is mainly configured to perform network computation at a non-convolutional/fully-connected layer of a neural network, for example, batch normalization (batch normalization), pixel-level summation, and upsampling of a predicted label plane.

In some implementations, the vector calculation unit 1707 can store a processed output vector in the unified memory 1706. For example, the vector calculation unit 1707 may apply a linear function or a nonlinear function to the output of the operation circuit 1703, for example, perform linear interpolation on a predicted label plane extracted from a convolutional layer, and for another example, obtain a vector of an accumulated value to generate an activation value. In some implementations, the vector calculation unit 1707 generates a normalized value, a pixel-level sum value, or both. In some implementations, the processed output vector can be used as an activation input to the operation circuit 1703, for example, the processed output vector can be used at a subsequent layer of the neural network.

The instruction fetch buffer (instruction fetch buffer) 1709 connected to the controller 1704 is configured to store instructions used by the controller 1704.

The unified memory 1706, the input memory 1701, the weight memory 1702, and the instruction fetch buffer 1709 are all on-chip memories. The external memory is private to a hardware architecture of the NPU.

Any one of the processors mentioned above may be a general-purpose central processing unit, a microprocessor, an ASIC, or one or more integrated circuits for controlling program execution.

In addition, it should be noted that the described apparatus embodiment is merely an example. The units described as separate parts may or may not be physically separate, and parts displayed as units may or may not be physical units, may be located in one position, or may be distributed on a plurality of network units. Some or all the modules may be selected according to actual needs to achieve the objectives of the solutions of embodiments. In addition, in the accompanying drawings of the apparatus embodiments provided by this application, connection relationships between modules indicate that the modules have communication connections with each other, which may be specifically implemented as one or more communications buses or signal cables.

Based on the description of the foregoing implementations, a person skilled in the art may clearly understand that this application may be implemented by software in addition to necessary universal hardware, or by dedicated hardware, including an application-specific integrated circuit, a dedicated CPU, a dedicated memory, a dedicated component, and the like. Usually, any functions that can be performed by a computer program can be easily implemented by using corresponding hardware. Moreover, a specific hardware structure used to achieve a same function may be in various forms, for example, in a form of an analog circuit, a digital circuit, or a dedicated circuit. However, as for this application, software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, a network device, or the like) to perform the methods in embodiments of this application.

All or some of the foregoing embodiments may be implemented by using software, hardware, firmware, or any combination thereof. When software is used to implement embodiments, all or a part of embodiments may be implemented in a form of a computer program product.

The computer program product includes one or more computer instructions. When the computer program instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium, or may be transmitted from a computer-readable storage medium to another computer-readable storage medium. For example, the computer instructions may be transmitted from a website, a computer, a training device, or a data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium that can be stored by a computer, or a data storage device, for example, a training device or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. An action prediction method, wherein the method comprises:

    obtaining state information of a first agent, wherein the state information indicates that the first agent and a second agent are in a first state; and
    processing the state information by using a generative flow model, to obtain occurrence probabilities of N actions of the first agent, wherein an $i^{th}$ action is used to enable the first agent and the second agent to enter an $i^{th}$ second state from the first state, i=1, ..., N, and N≥1.

2. The method according to claim 1, wherein the processing the state information by using a generative flow model, to obtain occurrence probabilities of N joint actions between the first agent and the second agent comprises:
    processing the state information by using the generative flow model, to obtain the occurrence probabilities of the N joint actions between the first agent and the second agent, wherein an $i^{th}$ joint action is used to enable the first agent and the second agent to enter the $i^{th}$ second state from the first state, the $i^{th}$ joint action comprises the $i^{th}$ action of the first agent and an $i^{th}$ action of the second agent, and the occurrence probabilities of the N joint actions are the occurrence probabilities of the N actions of the first agent.

3. The method according to claim 1 or 2, wherein after the processing the state information by using a generative flow model, to obtain occurrence probabilities of N actions of the first agent, the method further comprises:

    selecting an action with a highest occurrence probability from the N actions; and
    performing the action with the highest occurrence probability.

4. The method according to any one of claims 1 to 3, wherein the state information is information collected when the first agent is in the first state, and the information comprises at least one of the following: an image, a video, an audio, or a text.

5. A model training method, wherein the method comprises:

    obtaining state information of a first agent, wherein the state information indicates that the first agent and a second agent are in a first state;
    processing the state information by using a to-be-trained flow model, to obtain occurrence probabilities of N joint actions between the first agent and the second agent, wherein an $i^{th}$ joint action in the N joint actions is used to enable the first agent and the second agent to enter an $i^{th}$ second state from the first state, the $i^{th}$ joint action comprises an $i^{th}$ action of the first agent and an $i^{th}$ action of the second agent, and i=1, ..., N; and
    updating a parameter of the to-be-trained model based on the occurrence probabilities of the N joint actions, until a model training condition is met, to obtain a generative flow model.

6. The method according to claim 5, wherein the processing the state information by using a to-be-trained flow model, to obtain occurrence probabilities of N joint actions between the first agent and the second agent comprises:

    processing the state information by using a to-be-trained model of the first agent, to obtain occurrence probabilities of N actions of the first agent, wherein N≥1; and
    determining the occurrence probabilities of the N joint actions between the first agent and the second agent based on the occurrence probabilities of the N actions of the first agent and occurrence probabilities of N actions of the second agent, wherein the N actions of the second agent are obtained by using a to-be-trained model of the second agent, and the $i^{th}$ joint action in the N joint actions is used to enable the first agent and the second agent to enter the $i^{th}$ second state from the first state.

7. The method according to claim 5 or 6, wherein the updating a parameter of the to-be-trained model based on the occurrence probabilities of the N joint actions, until a model training condition is met, to obtain a generative flow model comprises:

    determining a target loss based on occurrence probabilities of M joint actions between the first agent and the second agent, the occurrence probabilities of the N joint actions, and a reward value corresponding to the first state, wherein a $j^{th}$ joint action in the M joint actions is used to enable the first agent and the second agent to enter the first state from a $j^{th}$ third state, j=1, ..., M, and M≥1; and
    updating the parameter of the to-be-trained model based on the target loss, until the model training condition is met, to obtain the generative flow model.

8. The method according to any one of claims 5 to 7, wherein the state information is information collected when the first agent is in the first state, and the information comprises at least one of the following: an image, a video, an audio, or a text.

9. An action prediction apparatus, wherein the apparatus comprises:

    an obtaining module, configured to obtain state information of a first agent, wherein the state information indicates that the first agent and a second agent are in a first state; and
    a processing module, configured to process the state information by using a generative flow model, to obtain occurrence probabilities of N actions of the first agent, wherein an $i^{th}$ action is used to enable the first agent and the second agent to enter an $i^{th}$ second state from the first state, i=1, ..., N, and N≥1.

10. The apparatus according to claim 9, wherein the processing module is configured to process the state information by using the generative flow model, to obtain occurrence probabilities of N joint actions between the first agent and the second agent, wherein an $i^{th}$ joint action is used to enable the first agent and the second agent to enter the $i^{th}$ second state from the first state, the $i^{th}$ joint action comprises the $i^{th}$ action of the first agent and an $i^{th}$ action of the second agent, and the occurrence probabilities of the N joint actions are the occurrence probabilities of the N actions of the first agent.

11. The apparatus according to claim 9 or 10, wherein the processing module is further configured to:

    select an action with a highest occurrence probability from the N actions; and
    perform the action with the highest occurrence probability.

12. The apparatus according to any one of claims 9 to 11, wherein the state information is information collected when the first agent is in the first state, and the information comprises at least one of the following: an image, a video, an audio, or a text.

13. A model training apparatus, wherein the apparatus comprises:

    an obtaining module, configured to obtain state information of a first agent, wherein the state information indicates that the first agent and a second agent are in a first state;
    a processing module, configured to process the state information by using a to-be-trained flow model, to obtain occurrence probabilities of N joint actions between the first agent and the second agent, wherein an $i^{th}$ joint action in the N joint actions is used to enable the first agent and the second agent to enter an $i^{th}$ second state from the first state, the $i^{th}$ joint action comprises an $i^{th}$ action of the first agent and an $i^{th}$ action of the second agent, and i=1, ..., N; and
    an updating module, configured to update a parameter of the to-be-trained model based on the occurrence probabilities of the N joint actions, until a model training condition is met, to obtain a generative flow model.

14. The apparatus according to claim 13, wherein the processing module comprises:

    a first processing module, configured to process the state information by using a to-be-trained model of the first agent, to obtain occurrence probabilities of N actions of the first agent, wherein N≥1; and
    a second processing module, configured to determine the occurrence probabilities of the N joint actions between the first agent and the second agent based on the occurrence probabilities of the N actions of the first agent and occurrence probabilities of N actions of the second agent, wherein the N actions of the second agent are obtained by using a to-be-trained model of the second agent, and the $i^{th}$ joint action in the N joint actions is used to enable the first agent and the second agent to enter the $i^{th}$ second state from the first state.

15. The apparatus according to claim 13 or 14, wherein the updating module is configured to:

determine a target loss based on occurrence probabilities of M joint actions between the first agent and the second agent, the occurrence probabilities of the N joint actions, and a reward value corresponding to the first state, wherein a $j^{th}$ joint action in the M joint actions is used to enable the first agent and the second agent to enter the first state from a $j^{th}$ third state, j=1, ..., M, and M$\geq$1; and
update the parameter of the to-be-trained model based on the target loss, until the model training condition is met, to obtain the generative flow model.

16. The apparatus according to any one of claims 13 to 15, wherein the state information is information collected when the first agent is in the first state, and the information comprises at least one of the following: an image, a video, an audio, or a text.

17. An action prediction apparatus, wherein the apparatus comprises a memory and a processor, the memory stores code, the processor is configured to execute the code, and when the code is executed, the action prediction apparatus performs the method according to any one of claims 1 to 8.

18. A computer storage medium, wherein the computer storage medium stores one or more instructions, and when the instructions are executed by one or more computers, the one or more computers are enabled to perform the method according to any one of claims 1 to 8.

19. A computer program product, wherein the computer program product stores instructions, and when the instructions are executed by a computer, the computer is enabled to implement the method according to any one of claims 1 to 8.

FIG. 1

EP 4 579 615 A1

FIG. 2a

Interaction interface

State information of an agent

Occurrence probability of a joint action (independent action)

Memory

Processor

Data training/Machine learning/Deep learning

Search/Inference/ Decision-making

...

Data processing device (server)

13:21

EP 4 579 615 A1

Smart terminal

13:21

Interaction interface

| State information of an agent | Occurrence probability of a joint action (independent action) |

Memory

Processor:

| Data training/Machine learning/ Deep learning | Search/Inference/ Decision-making | ... |

Smart terminal

FIG. 2b

300

Data storage
system 250

Execution device 210

...

Communication network

Local device
301

Local device
302

Examples

FIG. 2c

FIG. 3

FIG. 4

Obtain state information of a first agent, where the state information indicates that the first agent and a second agent are in a first state

501

Process the state information by using a generative flow model, to obtain occurrence probabilities of N joint actions between the first agent and the second agent, where an $i^{th}$ joint action is used to enable the first agent and the second agent to enter an $i^{th}$ second state from the first state, the $i^{th}$ joint action includes an action of the first agent and an action of the second agent, i=1, ..., N, and N≥1

502

FIG. 5

FIG. 6

EP 4 579 615 A1

Obtain state information of a first agent, where the state information indicates that the first agent and a second agent are in a first state

701

Process the state information by using a generative flow model, to obtain occurrence probabilities of N actions of the first agent, where an $i^{th}$ action is used to enable the first agent and the second agent to enter an $i^{th}$ second state from the first state, i=1, ..., N, and N≥1

702

FIG. 7

S10

S11

Traffic of a9

Traffic of a10

Traffic of a10

S7

S8

S9

Traffic of a7

Traffic of a8

Traffic of a8

Traffic of a7

S5

S6

Traffic of a5

Traffic of a5

S3

S4

Traffic of a3

Traffic of a4

Traffic of a4

S1

S2

Traffic of a1

Traffic of a2

S0

FIG. 8

901

Obtain state information of a first agent, where the state information indicates that the first agent and a second agent are in a first state

902

Process the state information by using a to-be-trained flow model, to obtain occurrence probabilities of N joint actions between the first agent and the second agent, where an $i^{th}$ joint action in the N joint actions is used to enable the first agent and the second agent to enter an $i^{th}$ second state from the first state, the $i^{th}$ joint action includes an action of the first agent and an action of the second agent, and i=1, ..., N

903

Update a parameter of the to-be-trained model based on the occurrence probabilities of the N joint actions, until a model training condition is met, to obtain a generative flow model

FIG. 9

1001

Obtain state information of a first agent, where the state information indicates that the first agent and a second agent are in a first state

1002

Process the state information by using a to-be-trained model of the first agent, to obtain occurrence probabilities of N actions of the first agent, where N≥1

1003

Determine occurrence probabilities of N joint actions between the first agent and the second agent based on the occurrence probabilities of the N actions of the first agent and occurrence probabilities of N actions of the second agent, where the N actions of the second agent are obtained by using a to-be-trained model of the second agent, and an $i^{th}$ joint action in the N joint actions is used to enable the first agent and the second agent to enter an $i^{th}$ second state from the first state

1004

Update a parameter of the to-be-trained model of the first agent based on the occurrence probabilities of the N joint actions, until a model training condition is met, to obtain a generative flow model of the first agent

FIG. 10

Action prediction apparatus

Obtaining module — 1101

Processing module — 1102

FIG. 11

Action prediction apparatus

Obtaining module — 1201

Processing module — 1202

FIG. 12

Model training apparatus

Obtaining module — 1301

Processing module — 1302

Updating module — 1303

FIG. 13

Model training apparatus

Obtaining module — 1401

First processing module — 1402

Second processing module — 1403

Updating module — 1404

FIG. 14

1500

Execution device

Antenna                                    Antenna

| Receiver 1501 | Transmitter 1502 |

Processor 1503

| Memory 1504 | Application processor 15031 | Communication processor 15032 |

FIG. 15

1600

Training device

1614 — Central processing unit

Power supply — 1626

1650 — Wired or wireless network interface

Operating system — 1641

Data — 1644

Application — 1642

Storage medium — 1630

Input/Output interface — 1658

Memory — 1632

FIG. 16

| | Weight memory 1702 |
| --- | --- |

| Input memory 1701 | Operation circuit 1703 |
| --- | --- |

| Vector calculation unit 1707 | Accumulator 1708 |
| --- | --- |

| Storage unit access controller 1705 | Unified memory 1706 | Controller 1704 | Instruction fetch memory 1709 |
| --- | --- | --- | --- |

Main CPU

External memory

Bus interface unit 1713

Neural network processor 1700

FIG. 17

## INTERNATIONAL SEARCH REPORT

| International application No. |
|---|
| **PCT/CN2023/118708** |

**A. CLASSIFICATION OF SUBJECT MATTER**

G06V 20/40(2022.01)i

According to International Patent Classification (IPC) or to both national classification and IPC

**B. FIELDS SEARCHED**

Minimum documentation searched (classification system followed by classification symbols)

IPC:G06V, G06K, G06N

Documentation searched other than minimum documentation to the extent that such documents are included in the fields searched

Electronic data base consulted during the international search (name of data base and, where practicable, search terms used)

CNKI, CNTXT, USTXT, EPTXT, WOTXT, VEN, CNABS, IEEE, BING: 第二, 智能体, 动作, 多智能体, 概率, 联合, 强化学习, 生成流模型, 生成流网络, 生成式流网络, 预测, 状态, second, agent, action, multi agent, probability, union, reinforcement learning, GflowNet, generative flow network, prediction, state

**C. DOCUMENTS CONSIDERED TO BE RELEVANT**

| Category* | Citation of document, with indication, where appropriate, of the relevant passages | Relevant to claim No. |
|---|---|---|
| PX | CN 115565104 A (HUAWEI TECHNOLOGIES CO., LTD.) 03 January 2023 (2023-01-03) claims 1-19 | 1-19 |
| Y | CN 113341958 A (NORTHWESTERN POLYTECHNIC UNIVERSITY) 03 September 2021 (2021-09-03) abstract, figures 1-8, and claim 1 | 1, 3-4, 9, 11-12, 17-19 |
| Y | CN 115034379 A (HUAWEI TECHNOLOGIES CO., LTD.) 09 September 2022 (2022-09-09) description, paragraphs [0003]-[0006] and [0027]-[0029], claims 1 and 29-31, and figures 1-16 | 1, 3-4, 9, 11-12, 17-19 |
| A | CN 114254567 A (BEIJING BOCHENG SCIENCE AND TECHNOLOGY CO., LTD.) 29 March 2022 (2022-03-29) entire document | 1-19 |
| A | US 2022198709 A1 (BUILDOTS LTD.) 23 June 2022 (2022-06-23) entire document | 1-19 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **20 November 2023** | **27 November 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/118708** |

**C.    DOCUMENTS CONSIDERED TO BE RELEVANT**

| Category* | Citation of document, with indication, where appropriate, of the relevant passages | Relevant to claim No. |
|---|---|---|
| A | CN 109726903 A (CHINA ACADEMIC OF ELECTRONICS AND INFORMATION TECHNOLOGY) 07 May 2019 (2019-05-07)<br>entire document | 1-19 |

Form PCT/ISA/210 (second sheet) (July 2022)

**INTERNATIONAL SEARCH REPORT**
Information on patent family members

International application No.

**PCT/CN2023/118708**

| Patent document cited in search report | | | Publication date (day/month/year) | Patent family member(s) | | | Publication date (day/month/year) |
|---|---|---|---|---|---|---|---|
| CN | 115565104 | A | 03 January 2023 | None | | | |
| CN | 113341958 | A | 03 September 2021 | None | | | |
| CN | 115034379 | A | 09 September 2022 | None | | | |
| CN | 114254567 | A | 29 March 2022 | None | | | |
| US | 2022198709 | A1 | 23 June 2022 | AU | 2020254129 | A1 | 04 November 2021 |
| | | | | WO | 2020202163 | A1 | 08 October 2020 |
| | | | | CA | 3136055 | A1 | 08 October 2020 |
| | | | | WO | 2020202164 | A2 | 08 October 2020 |
| | | | | WO | 2020202164 | A3 | 12 November 2020 |
| | | | | EP | 3938919 | A1 | 19 January 2022 |
| | | | | US | 2022207458 | A1 | 30 June 2022 |
| | | | | CA | 3136056 | A1 | 08 October 2020 |
| | | | | AU | 2020255407 | A1 | 04 November 2021 |
| | | | | EP | 3938981 | A2 | 19 January 2022 |
| CN | 109726903 | A | 07 May 2019 | None | | | |

Form PCT/ISA/210 (patent family annex) (July 2022)

**REFERENCES CITED IN THE DESCRIPTION**

**Patent documents cited in the description**

- CN 202211192232